(19) **Europäisches Patentamt / European Patent Office / Office européen des brevets**

(11) **EP 4 518 512 A1**

(12) **EUROPEAN PATENT APPLICATION**
published in accordance with Art. 153(4) EPC

(43) Date of publication:
**05.03.2025 Bulletin 2025/10**

(21) Application number: 23796876.3

(22) Date of filing: **28.04.2023**

(51) International Patent Classification (IPC):
*H04W 72/12* (2023.01)    *H04W 72/231* (2023.01)
*H04W 72/232* (2023.01)   *H04W 72/04* (2023.01)
*H04W 76/28* (2018.01)    *H04L 1/18* (2023.01)

(52) Cooperative Patent Classification (CPC):
**H04L 1/18; H04W 72/04; H04W 72/12;
H04W 72/231; H04W 72/232; H04W 76/28**

(86) International application number:
**PCT/KR2023/005848**

(87) International publication number:
**WO 2023/211237 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.04.2022 US 202263336221 P**

(71) Applicant: **LG Electronics Inc.
Yeongdeungpo-gu
Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**
• **KIM, Jaehyung**
  **Seoul 06772 (KR)**
• **BAE, Duckhyun**
  **Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD AND DEVICE FOR TRANSMITTING OR RECEIVING CONFIGURED GRANT PUSCH IN WIRELESS COMMUNICATION SYSTEM**

(57)    A method and a device for transmitting or receiving a configured grant PUSCH in a wireless communication system are disclosed. The method according to an embodiment of the present disclosure may comprise the steps of: receiving individual configuration information related to one or more CG configurations from a base station; receiving control information from the base station, wherein the control information comprises information on a specific interval, and transmission of a CG PUSCH is not performed in a CG PUSCH resource for the one or more CG configurations included in the specific interval; and transmitting the CG PUSCH in a CG PUSCH resource for the one or more CG configurations not included in the specific interval.

FIG. 12

Receive respective configuration information related to one or more configured grant configurations — S1201

Receive control information — S1202

Transmit configured grant PUSCH — S1203

EP 4 518 512 A1

**Description**

[Technical Field]

The present disclosure relates to a wireless communication system, and in more detail, relates to a method and an apparatus for transmitting and receiving a configured grant (CG) PUSCH (physical uplink shared channel) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving a CG PUSCH for CG configuration.

In addition, an additional technical object of the present disclosure is to provide a method and an apparatus for transmitting and receiving a CG PUSCH while considering a discontinuous reception (DRX) operation of a base station or a UE.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: receiving, from a base station respective configuration information related to one or more configured grant (CG) configurations; receiving control information from the base station, wherein the control information includes information on a specific duration, and transmission of a CG PUSCH (physical uplink shared channel) is not performed on CG PUSCH resources for one or more CG configurations included in the specific duration; and transmitting the CG PUSCH on CG PUSCH resources for the one or more CG configurations not included in the specific duration.

A method performed by a base station in a wireless communication system according to an additional aspect of the present disclosure may include: transmitting, to a user equipment (UE), respective configuration information related to one or more configured grant (CG) configurations; transmitting control information to the UE, wherein the control information includes information on a specific duration, and transmission of a CG PUSCH (physical uplink shared channel) is not received on CG PUSCH resources for one or more CG configurations included in the specific duration; and receiving the CG PUSCH on CG PUSCH resources for the one or more CG configurations not included in the specific duration.

[Technical Effects]

According to an embodiment of the present disclosure, unnecessary power waste can be reduced by determining whether to transmit a CG PUSCH according to a DRX operation of a UE or a base station.

In addition, according to an embodiment of the present disclosure, CG resources can be efficiently operated to support an XR (extended reality) operation.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating a DRX cycle in a wireless communication system to which the present disclosure can be applied.
FIG. 8 illustrates a structure/pattern of a group of pictures.
FIG. 9 illustrates a plurality of configured grant configurations according to an embodiment of the present disclosure.
FIG. 10 illustrates a single configured grant configuration according to an embodiment of the present disclosure.
FIG. 11 illustrates a signaling procedure between a network and a UE for a method for transmitting and receiving a configured grant PUSCH according to an embodiment of the present disclosure.
FIG. 12 is a diagram illustrating an operation of a UE for a method for transmitting and receiving a configured grant PUSCH according to an embodiment of the present disclosure.
FIG. 13 is a diagram illustrating an operation of a base station for a method for transmitting and receiving a configured grant PUSCH according to an embodiment of the present disclosure.
FIG. 14 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control

- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel)
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

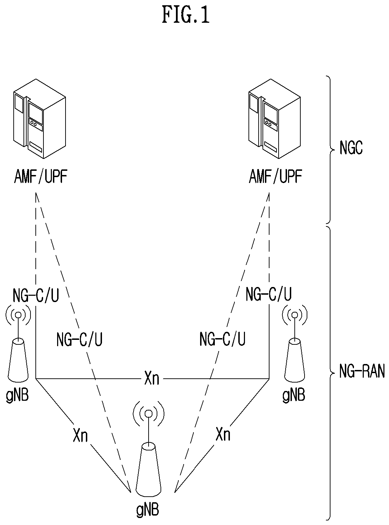

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

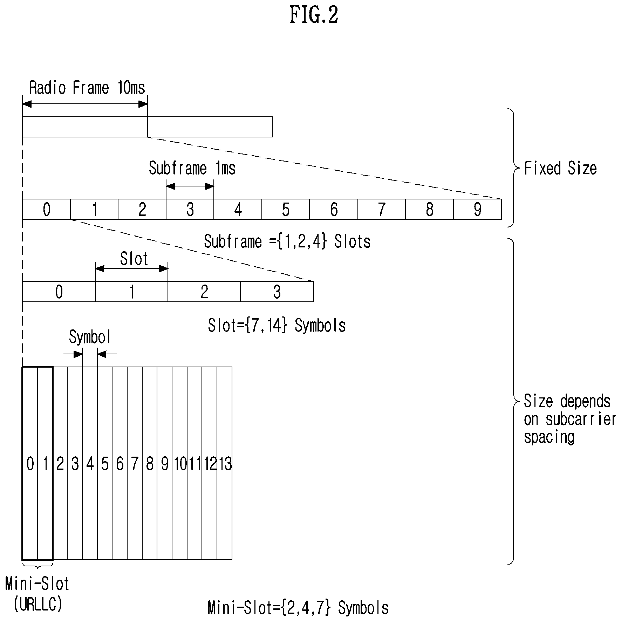

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

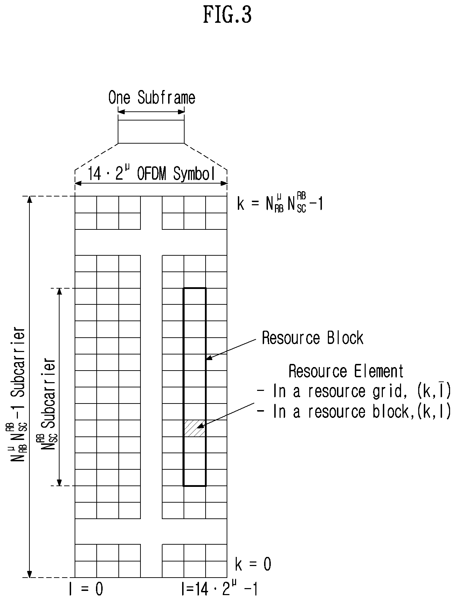

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,..., N_{RB}^{\mu}N_{sc}^{RB}-1$ is an index in a frequency domain and $l'=0,..., 2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

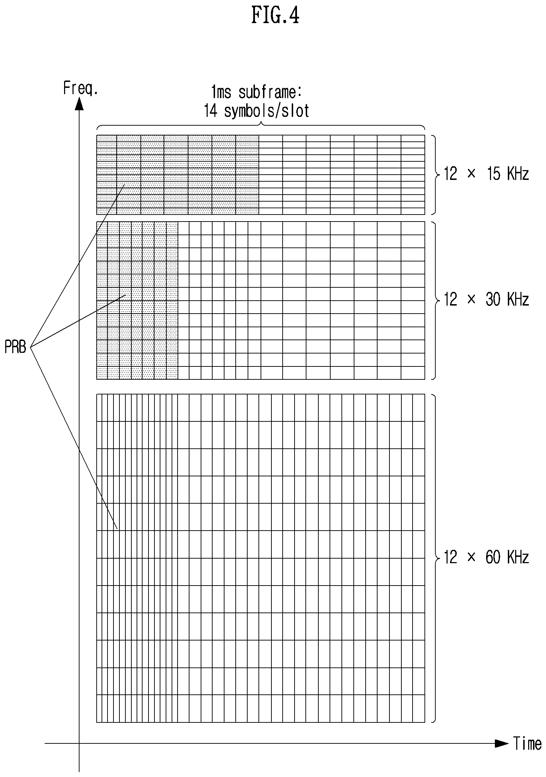

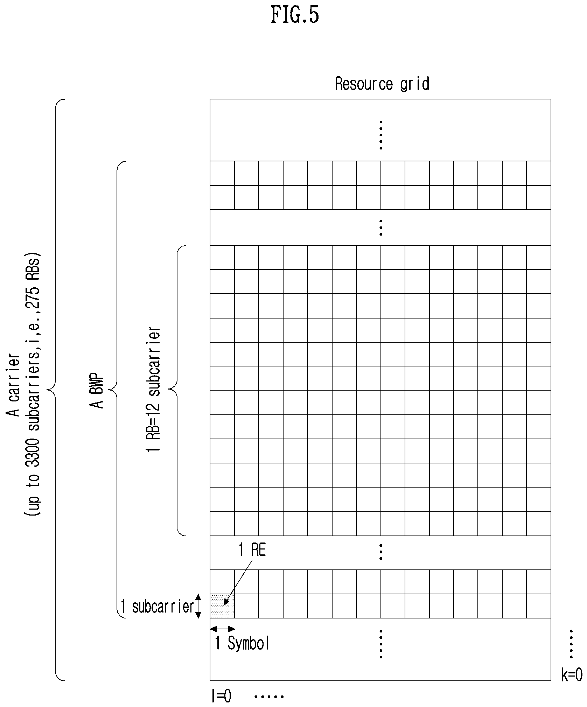

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

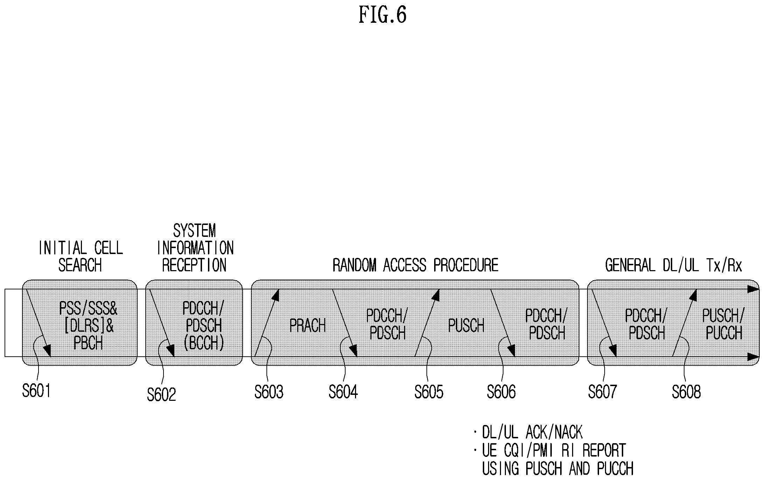

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Configured grant for uplink

Configured grant (CG) for a PUSCH is divided into CG Type 1 and CG Type 2.

CG Type 1 is completely configured or released for resource allocation by using RRC signaling. When CG Type 1 is configured, a UE is allocated a set of resources that can periodically transmit a PUSCH. A PDCCH is requested only when retransmission is required. CG Type 1 PUSCH transmission is semi-statically configured to operate when receiving the higher layer parameter configuredGrantConfig including rrc-ConfiguredUplinkGrant without detecting UL grant in DCI. A UE can perform PUSCH transmission according to the configured CG Type 1 until additional RRC signaling is re-established for the UE.

CG Type 2 is partially configured with resource allocation using RRC signaling, and is activated/deactivated using PDCCH transmission. Since a PDCCH also provides time and frequency resource allocation, the resource allocation may vary each time it is activated. CG Type 2 PUSCH transmission is semi-persistently scheduled by UL grant in a valid activation DCI after reception of the higher layer parameter configuredGrantConfig, which does not include rrc-ConfiguredUplinkGrant.

One or more CG configurations of CG Type 1 and/or CG Type 2 may be activated simultaneously on an activated BWP of a serving cell.

For PUSCH transmission corresponding to CG Type 1 or CG Type 2, parameters for PUSCH transmission can be provided by configuredGrantConfig.

Table 6 shows an example of configuredGrantConfig IE. configuredGrantConfig IE is used to configure uplink transmission without dynamic grant by DCI. The actual uplink grant can be configured by RRC (CG Type 1) or provided via PDCCH (by CS-RNTI) (CG Type 2). Multiple CG configurations can be configured within one BWP of a serving cell.

【Table 6】

```
-- ASN1START
-- TAG-CONFIGUREDGRANTCONFIG-START

ConfiguredGrantConfig ::=          SEQUENCE {
    frequencyHopping                 ENUMERATED {intraSlot, interSlot}
OPTIONAL,   -- Need S
    cg-DMRS-Configuration            DMRS-UplinkConfig,
    mcs-Table                      ENUMERATED {qam256, qam64LowSE}
OPTIONAL,   -- Need S
    mcs-TableTransformPrecoder       ENUMERATED {qam256, qam64LowSE}
OPTIONAL,   -- Need S
    uci-OnPUSCH                      SetupRelease { CG-UCI-OnPUSCH }
OPTIONAL,   -- Need M
    resourceAllocation              ENUMERATED { resourceAllocationType0,
resourceAllocationType1, dynamicSwitch },
    rbg-Size                       ENUMERATED {config2}
OPTIONAL,   -- Need S
    powerControlLoopToUse             ENUMERATED {n0, n1},
    p0-PUSCH-Alpha                 P0-PUSCH-AlphaSetId,
    transformPrecoder               ENUMERATED {enabled, disabled}
OPTIONAL,   -- Need S
    nrofHARQ-Processes                INTEGER(1..16),
    repK                          ENUMERATED {n1, n2, n4, n8},
    repK-RV                        ENUMERATED {s1-0231, s2-0303, s3-0000}
OPTIONAL,   -- Need R
    periodicity                    ENUMERATED {
                                sym2, sym7, sym1x14, sym2x14, sym4x14,
sym5x14, sym8x14, sym10x14, sym16x14, sym20x14,
                                sym32x14, sym40x14, sym64x14, sym80x14,
sym128x14, sym160x14, sym256x14, sym320x14, sym512x14,
                                sym640x14, sym1024x14, sym1280x14,
sym2560x14, sym5120x14,
                                sym6, sym1x12, sym2x12, sym4x12,
sym5x12, sym8x12, sym10x12, sym16x12, sym20x12, sym32x12,
```

```
                                sym40x12, sym64x12, sym80x12, sym128x12,
sym160x12, sym256x12, sym320x12, sym512x12, sym640x12,
                                sym1280x12, sym2560x12
    },
    configuredGrantTimer        INTEGER (1..64)
OPTIONAL,   -- Need R
    rrc-ConfiguredUplinkGrant       SEQUENCE {
        timeDomainOffset            INTEGER (0..5119),
        timeDomainAllocation        INTEGER (0..15),
        frequencyDomainAllocation       BIT STRING (SIZE(18)),
        antennaPort             INTEGER (0..31),
        dmrs-SeqInitialization      INTEGER (0..1)
OPTIONAL,   -- Need R
        precodingAndNumberOfLayers      INTEGER (0..63),
        srs-ResourceIndicator       INTEGER (0..15)
OPTIONAL,   -- Need R
        mcsAndTBS               INTEGER (0..31),
        frequencyHoppingOffset      INTEGER (1..
maxNrofPhysicalResourceBlocks-1)            OPTIONAL,   -- Need R
        pathlossReferenceIndex      INTEGER (0..maxNrofPUSCH-
PathlossReferenceRSs-1),
        ...,
        [[
        pusch-RepTypeIndicator-r16      ENUMERATED {pusch-
RepTypeA,pusch-RepTypeB}                 OPTIONAL,   -- Need M
        frequencyHoppingPUSCH-RepTypeB-r16  ENUMERATED {interRepetition,
interSlot}              OPTIONAL,   -- Cond RepTypeB
        timeReferenceSFN-r16        ENUMERATED {sfn512}
OPTIONAL    -- Need S
        ]]
    }
OPTIONAL,   -- Need R
    ...,
```

In Table 6, periodicity represents a period for uplink CG transmission, which means a time duration between consecutive continuous resource allocations. periodicityExt is used to calculate a period of uplink CG, and if this parameter does not exist, periodicity is ignored. An uplink CG period has different supported values depending on the configured subcarrier spacing.

nrofHARQ-Processes indicates the number of HARQ processes configured for the uplink CG. In case of dynamic resource allocation, a HARQ process identifier is specified in DCI associated with each resource allocation. However, in the uplink CG, an identifier of a HARQ process is determined based on the nrofHARQ-Processes value and the periodicity value.

repK indicates the number of repetitions, i.e., indicates the repetition level for each PUSCH transmission. repK can have one of {1,2,4,8} values. For CG Type 1, if pusch-RepTypeIndicator in rrc-ConfiguredUplinkGrant indicates 'pusch-RepTypeB', PUSCH repetition type B is applied, otherwise PUSCH repetition type A is applied. For CG Type 2, a PUSCH repetition type is determined by UL grant of DCI. A UE transmits an uplink TB repeatedly for the configured number of repetitions, depending on the configured PUSCH repetition type A or B.

repK-RV indicates the redundancy version sequence. repK-RV is configured when repetition is used (i.e., when repK is set to one of {2,4,8}).

resourceAllocation indicates a configuration of bitmap-based resource allocation type 0 or resource indication value (RIV)-based resource allocation type 1.

mcs-Table indicates an MCS table used by a UE for a PUSCH where transform precoding is not used, and mcs-TableTransformPrecoder indicates an MCS table used by a UE for a PUSCH where transform precoding is used. transformPrecoder indicates whether transform precoding is enabled for a PUSCH.

rrc-ConfiguredUplinkGrant is a configuration for CG Type 1 transmission. If this field does not exist, a UE uses UL grant configured by DCI by a CS-RNTI (i.e., CG Type 2). timeDomainAllocation indicates a start symbol and a length of a PUSCH and a PUSCH mapping type. timeDomainOffset indicates an offset related to a reference SFN (system frame number) indicated by timeReferenceSFN. timeReferenceSFN indicates an SFN used to determine an offset of resources in a time domain. A UE uses an SFN closest to the indicated number before reception of the configured grant configuration, and if this field does not exist, the reference SFN is 0.

After uplink grant is configured for CG Type 1, a MAC entity sequentially considers that the Nth (N≥0) uplink grant occurs within a symbol according to Equation 3 below. That is, when CG Type 1 is used, a CG PUSCH can be transmitted at a transmission occasion/opportunity satisfying Equation 3 below.

$$\text{--> } [(SFN \times numberOfSlotsPerFrame \times numberOfSymbolsPerSlot) + (\text{slot number in the frame} \times numberOfSymbolsPerSlot) + \text{symbol number in the slot}] = (timeReferenceSFN \times numberOfSlotsPerFrame \times numberOfSymbolsPerSlot + timeDomainOffset \times numberOfSymbolsPerSlot + S + N \times periodicity) \text{ modulo } (1024 \times numberOfSlotsPerFrame \times numberOfSymbolsPerSlot) \quad \text{[Equation 3]}$$

In addition, after uplink grant is configured for CG Type 2, a MAC entity sequentially considers that the Nth (N≥0) uplink grant occurs within a symbol according to Equation 4 below. That is, when CG Type 2 is used, a CG PUSCH can be transmitted at a transmission occasion/opportunity satisfying Equation 4 below.

$$[(SFN \times numberOfSlotsPerFrame \times numberOfSymbolsPerSlot) + (\text{slot number in the frame} \times numberOfSymbolsPerSlot) + \text{symbol number in the slot}] = [(SFN_{start\ time} \times numberOfSlotsPerFrame \times numberOfSymbolsPerSlot + slot_{start\ time} \times numberOfSymbolsPerSlot + symbol_{start\ time}) + N \times periodicity] \text{ modulo } (1024 \times numberOfSlotsPerFrame \times numberOfSymbolsPerSlot) \quad \text{[Equation 4]}$$

In Equations 3 and 4, numberOfSlotsPerFrame represents the number of consecutive slots per frame, and numberOfSymbolsPerSlot represents the number of consecutive symbols per slot.

In addition, timeReferenceSFN is used to determine an offset of resources in a time domain, and a UE may use an SFN closest to the indicated number before reception of the configured CG. timeDomainOffset represents an offset relative to a reference SFN indicated by timeReferenceSFN. periodicity represents a period of UL transmission for CG Type 1. timeReferenceSFN, timeDomainOffset, and periodicity can be configured by configuredGrantConfig (see Table 6). In addition, S corresponds to a start symbol deduced from timeDomainAllocation (see Table 6), and N is an integer value corresponding to the Nth transmission occasion/opportunity.

Additionally, $SFN_{start\ time}$, $slot_{start\ time}$, and $symbol_{start\ time}$ represent an SFN, a slot, and a symbol of the first transmission occasion/opportunity of a PUSCH (i.e., in a PUSCH transmission that occurs according to resource allocation in the active PDCCH) in which the CG is (re)initialized, respectively.

Meanwhile, in the case of dynamic resource allocation on a PDCCH, a HARQ process identity (HARQ process ID) is specified in DCI, whereas in the case of CG, DCI is not received before each PUSCH transmission, so a HARQ process is calculated according to Equation 5 or 6 below. A base station can configure the number of HARQ processes (e.g., nrofHARQ-Processes) and an offset used to derive a HARQ process ID (e.g., harq-ProcID-Offset2).

If an offset used to derive a HARQ process ID (e.g., harq-ProcID-Offset2) and a retransmission timer (cg-RetransmissionTimer) are not configured, a UE derives a HARQ process ID associated with a slot where uplink transmission starts from Equation 5 below. Alternatively, if an offset used to derive a HARQ process ID (e.g., harq-ProcID-Offset2) is configured, a UE derives a HARQ process ID associated with a slot where an uplink transmission starts from Equation 6 below.

【Equation 5】

$$\text{HARQ Process ID} = [\text{floor}(\text{CURRENT\_symbol}/\textit{periodicity})] \text{ modulo } \textit{nrofHARQ-Processes}$$

【Equation 6】

$$\text{HARQ Process ID} = [\text{floor}(\text{CURRENT\_symbol} / \textit{periodicity})] \text{ modulo } \textit{nrofHARQ-Processes} + \textit{harq-ProcID-Offset2}$$

In Equations 5 and 6, nrofHARQ-Processes defines the number of uplink HARQ processes and can have values from 1 to 16 (see Table 6). nrofHARQ-Processes is used to identify a HARQ process ID for a specific PUSCH transmission.

In addition, in Equations 5 and 6, CURRENT_symbol = (SFN $\times$ numberOfSlotsPerFrame $\times$ numberOfSymbolsPerSlot + slot number in the frame $\times$ numberOfSymbolsPerSlot + symbol number in the slot). numberOfSlotsPerFrame and numberOfSymbolsPerSlot mean the number of consecutive slots per frame and the number of consecutive symbols per slot, respectively.

Meanwhile, in Table 6, configuredGrantTimer indicates an initial value of a CG timer as a multiple of the periodicity. That is, configuredGrantTimer defines a duration (period) for which a UE waits for a retransmission request after transmitting an uplink packet. A CG timer is independently operated for each HARQ process.

More specifically, a MAC entity includes an HARQ entity for each serving cell having a configured uplink, which maintains multiple parallel HARQ processes. The number of parallel HARQ processes per HARQ entity is determined according to the standard specification. Each HARQ process supports one TB. Each HARQ process is associated with one HARQ process identifier (ID). When one TB is repeated in multiple CG PUSCHs (i.e., in multiple CG PUSCH TOs), the same HARQ process can be used for the repeated CG PUSCHs.

For an uplink grant, a HARQ entity identifies a HARQ process associated with the grant. For an identified HARQ process, if the uplink grant is a configured uplink grant and is used for the initial transmission for the configured uplink grant, a HARQ entity may start a CG timer (i.e., configuredGrantTimer) by an initial CG PUSCH transmission for the identified HARQ process according to Equation 5 or Equation 6. Here, a CG timer (i.e., configuredGrantTimer) may be started at the start of the first symbol of the initial CG PUSCH transmission.

A UE can assume a positive acknowledgement when a CG timer expires. The UE assumes a positive acknowledgment if this timer expires (i.e., if no retransmission request is received until the timer expires). This allows a UE to subsequently transmit new uplink data using the same HARQ process.

This CG timer should be configured long enough to ensure that a base station has time to receive an uplink packet and schedule a retransmission request, but if this CG timer is configured too long, a delay may occur because a UE cannot reuse the HARQ process for a new transmission until it assumes a positive acknowledgment for the previous transmission.

Discontinuous reception (DRX) operation

A UE configured with DRX can discontinuously receive DL signals to reduce power consumption. DRX can be performed in the RRC_IDLE state, RRC_INACTIVE state, and RRC_CONNECTED state.

Hereinafter, the DRX operation in the RRC_CONNECTED state is described.

In the RRC_CONNECTED state, DRX is used for discontinuous reception of a PDCCH. For convenience, DRX performed in the RRC_CONNECTED state is referred to as RRC_CONNECTED DRX.

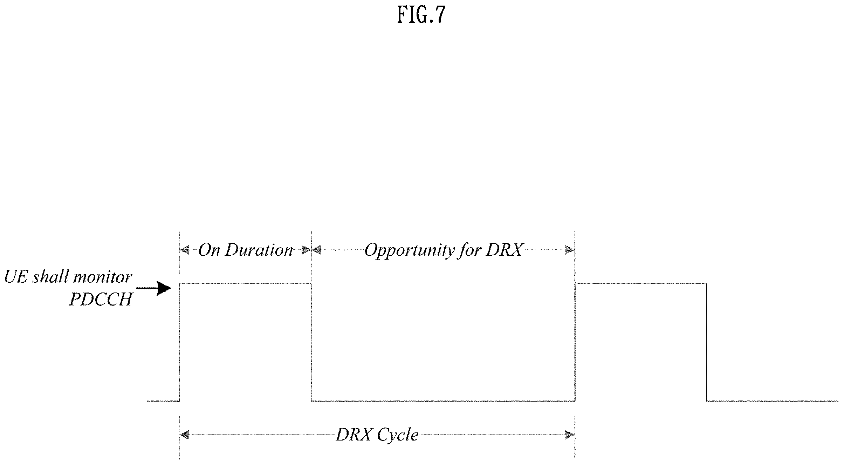

FIG. 7 is a diagram illustrating a DRX cycle in a wireless communication system to which the present disclosure can be applied.

Referring to FIG. 7, a DRX cycle includes On Duration and Opportunity for DRX. The DRX cycle defines a time interval during which the On Duration is periodically repeated. The On Duration indicates the time period during which a UE monitors to receive a PDCCH. When DRX is configured, a UE performs PDCCH monitoring during the On Duration. If there is a PDCCH that is successfully detected during the PDCCH monitoring, a UE starts an inactivity timer and remains in an awake state. On the other hand, if there is no PDCCH that is successfully detected during the PDCCH monitoring, a UE enters a sleep state after the On Duration ends. Therefore, when DRX is configured, PDCCH monitoring/reception can be performed discontinuously in a time domain when performing the procedure and/or method described/proposed above.

Table 7 shows a process of a UE related to DRX (RRC_CONNECTED state).

[Table 7]

|  | Type of signal | UE procedure |
|---|---|---|
| First step | RRC signaling (MAC-CellGroupConfig) | - Receive DRX configuration information |
| Second step | MAC CE ((long) DRX command MAC CE) | - Receive DRX command |
| Third step | - | - PDCCH monitoring during On Duration of DRX cycle |

Referring to Table 7, DRX related configuration information is received via higher layer (e.g., RRC) signaling (e.g., DRX-Config), and whether DRX is ON/OFF is controlled by the DRX command MAC CE of a MAC layer. When DRX is configured, a UE can perform PDCCH monitoring discontinuously as illustrated in FIG. 7.

Here, configuration information for a MAC cell group (MAC-CellGroupConfig) includes configuration information required to configure MAC parameters for a cell group. MAC-CellGroupConfig may also include configuration information regarding DRX (e.g., DRX-Config). For example, configuration information regarding DRX (e.g., DRX-Config) may include information defining DRX as follows:

- drx-onDurationTimer: Defines the duration in DRX cycle time.
- drx-SlotOffset: Defines the delay before the start of drx-onDurationTimer.
- drx-InactivityTimer: Defines the duration after a PDCCH occasion indicating a new UL, DL or SL for the MAC entity.
- drx-RetransmissionTimerDL: Defines the maximum duration until a DL retransmission is received.
- drx-RetransmissionTimerUL: Defines the maximum duration until a grant for a UL retransmission is received.
- drx-LongCycleStartOffset: Indicates a long DRX cycle, and also defines a subframe where a long and short DRX cycles start.
- drx-ShortCycle (optional): Defines a short DRX cycle.
- drx-ShortCycleTimer (optional): Defines a period for which a UE should follow a short DRX cycle.
- drx-HARQ-RTT-TimerDL: Defines the minimum period before DL assignment for HARQ retransmission expected by a MAC entity.
- drx-HARQ-RTT-TimerUL: Defines the minimum period before UL HARQ retransmission grant expected by a MAC entity.

More specifically about short DRX and long DRX operations, first, after receiving a PDCCH indicating initial UL or DL data, a DRX inactivity timer (drx-Inactivity Timer) is started/restarted, and a UE remains in an awake state until the DRX inactivity timer (drx-InactivityTimer) expires.

When a DRX inactivity timer (drx-InactivityTimer) expires, a short DRX cycle can be optionally performed. That is, a base station can configure a UE to use the short DRX cycle by including a short DRX parameter set (i.e., drx-ShortCycle, drx-ShortCycleTimer) in the DRX-Config. In other words, if a short DRX parameter set in the DRX-Config is not configured, a UE can use a long DRX cycle described below. During a period of a short DRX cycle, if [(SFN $\times$ 10) + subframe number] modulo (drx-ShortCycle) = (drx-StartOffset) modulo (drx-ShortCycle) is satisfied at the start of a specific subframe, a DRX active period starts after a DRX offset (drx-SlotOffset).

A UE maintains a DRX active state for a period defined by a DRX on-duration timer (drx-onDurationTimer). If data transmission is initiated during a DRX active period, a DRX inactivity timer (drx-InactivityTimer) is restarted and the above-described operations are performed thereafter.

When a short DRX cycle period (drx-ShortCycle $\times$ drx-ShortCycleTimer) ends, a long DRX cycle starts. Alternatively, if a short DRX parameter set in DRX-Config is not configured, a long DRX cycle may start when a DRX inactivity timer (drx-InactivityTimer) expires. During a long DRX cycle period, if [(SFN $\times$ 10) + subframe number] modulo (drx-LongCycle) = drx-StartOffset is satisfied at a start of a specific subframe, a DRX active period starts after a DRX offset (drx-SlotOffset).

In addition, if a UE becomes DRX inactive after transmitting uplink data on a PUSCH, the UE needs to temporarily return to DRX active state to check for a retransmission request from a base station. A DRX UL HARQ RTT (round trip time) timer (drx-HARQ-RTT-TimerUL) specifies the timing of returning to DRX active state relative to the end of the first repetition of PUSCH transmission (the end of PUSCH transmission if PUSCH repetition is not configured). That is, when a DRX UL HARQ RTT (round trip time) timer (drx-HARQ-RTT-TimerUL) expires, a UE transitions from DRX inactive to DRX active state. A UE maintains a DRX active state for a period defined by a DRX UL retransmission timer (drx-RetransmissionTimerUL).

Similarly, if a UE is in DRX inactive state after receiving downlink data on a PDSCH and the UE transmits a NACK (negative acknowledgement) for the data on a PUCCH, the UE needs to return to DRX active state to receive retransmission from a base station. In this case, a DRX DL HARQ RTT timer (drx-HARQ-RTT-TimerDL) is started after a UE transmits a NACK on a PUCCH. That is, when a DRX DL HARQ RTT timer (drx-HARQ-RTT-TimerDL) expires, a UE transitions from DRX inactive to DRX active state. A UE maintains the DRX active state for a period defined by a DRX DL retransmission timer (drx-RetransmissionTimerDL).

Meanwhile, a DRX command MAC CE and a long DRX command MAC CE are used to immediately cause a UE to enter the DRX inactive state without waiting for a DRX inactivity timer (drx-InactivityTimer) to expire. A DRX command MAC CE instructs a UE to enter the DRX inactive state, and if short DRX is configured, a UE starts a short DRX cycle, and if short DRX is not configured, a UE starts a long DRX cycle. A long DRX command MAC CE instructs a UE to enter the DRX inactive state and start a long DRX cycle.

Method for transmitting and receiving a PUSCH using configured grant (CG)

In the present disclosure, when video information of an extended reality (XR) service is transmitted using a resource configured in advance, such as a configured grant (CG) of an NR wireless communication system, a method is proposed to reduce power consumption and increase the efficiency of wireless resources while ensuring the availability and reliability of transmission resources.

In NR, one or more CG PUSCHs can be configured for a UE for periodic transmission and reception or for low latency and PDCCH overhead. Each CG configuration has a period and configured/indicated resources can be repeated. That is, the initially configured/indicated resource allocation is repeated with the configured period, and the UE can perform uplink transmission on the corresponding resources without a separate PDCCH reception process.

Meanwhile, types of data that can be generated in XR are diverse. Among these data, sensor and location information of a UE and video data transmissions that are generally reported with a specific cycle are being considered to be transmitted and received from CG resources. These data may not always have a fixed data generation time (traffic arrival time) and may have jitter due to reasons such as video encoding time, sensor measurement time, higher layer operation, or changes in routing of the transmitted network.

If resources are allocated to a location far enough away from the expected traffic occurrence time considering jitter, etc., resource availability can be guaranteed, but delays may occur. On the other hand, if CG resources with fixed cycles are allocated to the expected data occurrence time, a larger delay may occur due to the waiting time until the next available resource when jitter occurs.

In addition, since some data are generated based on events, it is impossible to accurately identify the actual data generation time, but the use of CG resources for such data is being considered to reduce the delay time caused by scheduling. In this case, skipping methods have been discussed in the past, in which sufficient resources are allocated in short cycles in preparation for the generation of data, and a UE or a base station selectively uses these resources and does not actually use other resources. However, in order to use the method of skipping transmission and reception, it is necessary to consider response signals between a UE and a base station to determine whether to receive and transmit. If a UE sends a response signal even for transmission that has not been received, a base station needs to always prepare resources for the UE to send the response signal. In addition, considering that the skipping method is based on setting sufficient resources in the radio resources, it can act as a large uplink burden. Also, considering that these resources can be multiplexed between UEs, the burden of uplink resources should be considered more importantly.

Since securing low latency is essential for the quality of XR service, it is necessary to consider a method to minimize the impact of latency while reducing the impact of jitter. In this disclosure, in order to solve this problem, a method is discussed to selectively use some of the multiple CG resources configured between a UE and a base station and to simplify and transmit the response to the used CG resources to a pre-determined location.

A group of pictures (GOP) of video coding may include the following picture types.

I picture or I frame (i.e., an intra-coded picture) (also referred to as a key frame or i-frame) is a picture that is encoded independently of all other pictures. Each GOP starts with a picture of this type (in decoding order).

P picture or P frame (i.e., a predictive coded picture) contains motion-compensated difference information relative to previously decoded pictures. For example, in previous designs such as H.262/MPEG-2 and H.263, each P picture can refer to only one picture, which must precede the P picture in display order and decoding order, and which must be an I or P picture. These constraints do not apply to the new standards H.264/MPEG-4 AVC and HEVC.

B-picture or B-frame (bipredictive coded pictures) contain motion-compensated difference information compared to previously decoded pictures. For example, in previous designs such as MPEG-1 and H.262/MPEG-2, each B-picture can only refer to two pictures, one that precedes the B-picture in display order and one that follows the B-picture, and all referenced pictures must be an I or P picture. This restriction does not apply to the new standards H.264/MPEG-4 AVC and HEVC.

D picture or D frame (direct coded (DC) picture) serves as a fast access representation of a picture for loss robustness or fast-forward. D pictures are used only in MPEG-1 video.

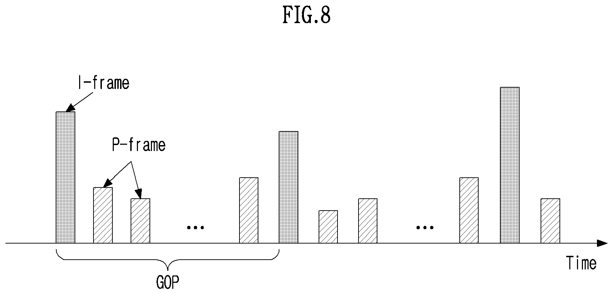

FIG. 8 illustrates a structure/pattern of a group of pictures.

Referring to Figure 8, an I frame indicates a start of a GOP. It is followed by several P and B frames. In previous designs, the allowable ordering and reference structures are relatively limited.

The GOP structure is often referenced by two numbers, for example, M=3, N=12. The first number (M) indicates the distance between two anchor frames (I or P). The second number (N) is the GOP size, which indicates a distance between two full images (I-frames). For example, for M=3, N=12, the GOP structure is IBBPBBPBBPBBI. Instead of the M parameter, the maximum number of B frames between two consecutive anchor frames can also be used.

For example, in a sequence with a pattern IBBBBPBBBBPBBBBBI, the GOP size (N value) is 15 (a length between two I frames) and the distance between two anchor frames (M value) is 5 (the length between an I frame and a P frame or the length between two consecutive P frames).

I frame contains the full image and no additional information is needed to reconstruct it. Typically, encoders use a GOP structure that ensures that each I frame is a "clean random access point". Therefore, decoding can start cleanly from an I frame and any errors within the GOP structure are corrected after processing the correct I frame.

In the following disclosure, the proposed method is described based on the uplink CG radio resources that are configured semi-statically, but this is for the convenience of explanation, and the methods proposed in the present disclosure are not limited thereto. Therefore, it can be understood by those skilled in the art that the methods proposed in the present disclosure can be extended and applied to the radio resource allocated through dynamic scheduling received by the UE. For example, the method of determining one HARQ-ACK timing for multiple downlink radio resources allocated to a UE can be applied regardless of an SPS PDSCH and a PDSCH indicated by dynamic scheduling. In addition, when multiple wireless resources are not configured semi-statically but are configured through dynamic instructions, for example, when multiple wireless resources are configured at once through DCI, the methods proposed in this disclosure can be applied. Therefore, the methods proposed in this disclosure can be applied to all types of transmission and reception methods expected by a base station and a UE, as long as the principle of the proposed method is not violated, even without a separate explanation. Hereinafter, in this disclosure, for the convenience of explanation, semi-persistent scheduling (SPS) can be used as a general concept to collectively refer to wireless resources that are configured semi-statically (e.g., DL/UL SPS, CG).

In addition, in the present disclosure, a transmission occasion/opportunity (TO) means a radio resource configured for CG use (e.g., CG PUSCH). In a transmission occasion, a subject performing transmission (i.e., a base station in the case of downlink, a UE in the case of uplink) may attempt to transmit in a TO, and a receiver (i.e., a UE in the case of downlink, a base station in the case of uplink) may expect transmission in each TO and attempt to receive it.

Hereinafter, in order to explain the principle of the proposed method, the present disclosure provides an example based on the NR system, but the proposed methods do not specifically limit the transmission and reception form of NR unless otherwise specified. In addition, in order to explain the principle of the proposed method, the present disclosure provides an example based on the characteristics and structure of XR services, but the proposed methods do not specifically limit the support of XR services unless otherwise specified. Therefore, the methods proposed in this disclosure can be applied to all wireless communication transmission and reception structures and services as long as the principle of the proposed method is not violated even without a separate explanation.

Hereinafter, the present disclosure proposes a method for controlling CG transmission to be possible only during a specific time interval according to a GOP pattern. Through this, power consumption of a base station can be reduced by allowing CG PUSCH transmission only during a specified time interval, and CG resources can be efficiently operated according to a traffic pattern.

For this purpose, the method proposed in this disclosure may include a method in which a base station allocates CG radio resources to a UE, and a method in which CG resources are received and transmitted. In addition, the method proposed in this disclosure may include a method in which a HARQ-ACK response to a CG PUSCH reception result is transmitted, and a method in which retransmission DCI of a base station is received through a PDCCH. In addition, the method proposed in this disclosure may include a process in which a UE transmits a signal and channel to inform its capability and/or service requirements, and a base station receives the signal and channel.

The method proposed in this disclosure may be applied by selecting some of the following methods. In addition, each method proposed in this disclosure may operate independently without separate combination, or may operate in a linked form by combining one or more methods. Some terms, symbols, and orders used to describe the method proposed in this disclosure may be replaced with other terms, symbols, and orders as long as the principle of the invention is maintained.

The following CG settings and activation/deactivation, transmission/reception operations, etc. can be supported in the present disclosure. That is, the following CG settings and activation/deactivation, transmission/reception operations, etc. can be incorporated into the methods proposed in the present disclosure.

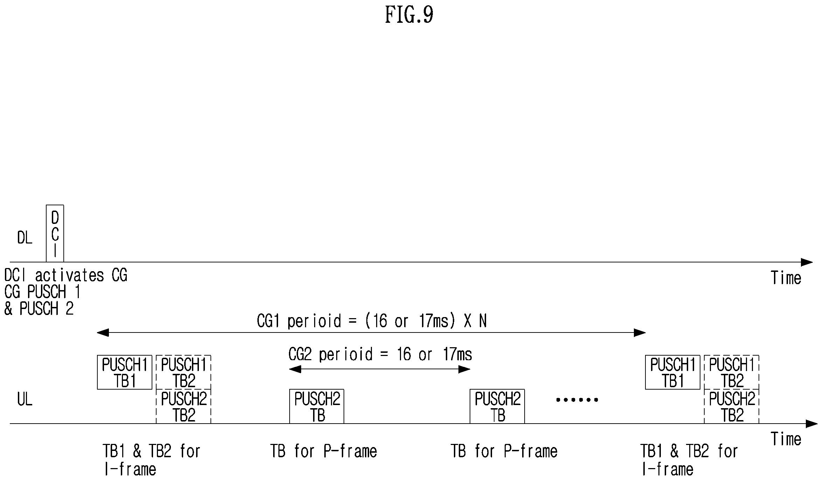

FIG. 9 illustrates a plurality of configured grant configurations according to an embodiment of the present disclosure.

- Multiple CGs (for example, CG1 and CG2 in the case of two CGs) can be configured as one CG group with a CG configuration that is linked/associated to each other, and CG1 can be configured as a primary CG and CG2 can be configured as a secondary CG. Here, the secondary CG can be a CG that is activated or received according to the transmission of the primary CG. For example, the CG configuration for CG PUSCH 1 in FIG. 9 is a primary CG configuration, and the CG configuration for CG PUSCH 2 is a secondary CG configuration, and the two CG configurations can be configured as one CG group.

- The primary CG and the secondary CG can be configured with different CG configuration indices. Alternatively, the primary CG and secondary CG may be configured with the same CG configuration index, but may be distinguished by a primary/secondary CG indicator or different sub-indexes through an RRC message or MAC CE or DCI.

i) If DCI indicates CG1 and also indicates activation, a UE may activate CG2 simultaneously with CG1 or after a certain period of time.

ii) Alternatively, if DCI indicates both CG1 and CG2 and also indicates activation, a UE may activate CG2 simultaneously with CG1 or after a certain period of time. For example, FIG. 9 illustrates a case where activation is indicated for both CG configuration for CG PUSCH 1 and CG configuration for CG PUSCH 2 by one DCI.

Here, the DCI may include different CG configuration indices for both CG1 and CG2.

Alternatively, the DCI may include a CG configuration index for CG1 and indicate a secondary CG indicator.

Alternatively, the DCI may include a CG configuration index for CG2 and indicate a primary CG indicator.

Alternatively, the DCI may include a CG configuration index for CG1 or CG2 and a sub-index for CG2 or CG1.

Alternatively, DCI may indicate a common CG configuration index for CG1 and CG2. For example, among HARQ process identifier (ID: identity) values indicating CG configuration indexes, a value between 1 and 8 may be configured as a conventional CG configuration index (i.e., for indicating a single CG configuration), and a HARQ process ID value exceeding 8 may be configured as a CG configuration index indicating multiple connected CGs simultaneously.

Alternatively, the DCI may include all different CG configuration sub-indexes for CG1 and CG2.

- A base station can configure different video frame types (e.g., I-frame and P-frame) to different logical channels. Accordingly, a UE can indicate that the data are for different video frames through a value of a logical channel identifier (LCID) field included in a sub-header of an uplink MAC protocol data unit (PDU) (i.e., transport block (TB)). Here, a base station can configure different logical channels for different video frame types to be mapped to different CGs. Here, CG1 and CG2 can be mapped to the same or different logical channels.

For example, referring to FIG. 9, different logical channels can be configured/allocated for I-frame and P-frame. In addition, a logical channel for I-frame can be mapped to CG for CG PUSCH 1, and a logical channel for P-frame can be mapped to CG for CG PUSCH 2.

- Activation or transmission/reception of CG2 can be determined depending on whether CG1 is activated or transmitted/received. Here, activation of CG2 can be configured to occur simultaneously with or after activation of CG1.
- A UE can expect CG2 PUSCH transmission to occur only after CG1 PUSCH transmission. Accordingly, CG2 PUSCH transmission in the next period can be determined based on whether CG1 PUSCH is transmitted.
- When CG1 PUSCH and CG2 PUSCH are transmitted/allocated in TDM or FDM in the same period or partially overlapping periods, when transmitting CG1 PUSCH, a UE may decide that CG2 PUSCH resource is invalid or to skip CG2 PUSCH transmission. Alternatively, a UE may deactivate CG2 or deactivate activated CG2. For example, as shown in FIG. 9, the CG configuration for CG PUSCH 1 may be configured with a period of N times 16 ms or 17 ms (N is a natural number), and the CG configuration for CG PUSCH 2 may be configured with a period of 16 ms or 17 ms. And, CG configurations for N CG PUSCH 2 may overlap within one period of the CG configuration for CG PUSCH 1. That is, as shown in FIG. 9, in the first period of CG PUSCH 2, CG PUSCH 2 and CG PUSCH 1 can be allocated as TDM or FDM. In this case, the resource of CG PUSCH 2 (PUSCH 2 carrying TB2 for I-frame in FIG. 9) can be determined to be invalid or the transmission of CG PUSCH 2 can be determined to be skipped.
- When CG1 PUSCH and CG2 PUSCH are transmitted/allocated in the same slot as TDM or FDM, or when CG1 PUSCH and CG2 PUSCH resources overlap, a UE prioritizes CG1 PUSCH reception regardless of the CG configuration indexes of CG1 and CG2. That is, in this case, a UE can skip CG2 PUSCH resource transmission and transmit CG1 PUSCH resource. For example, as shown in FIG. 9, CG PUSCH 2 (PUSCH 2 carrying TB2 for I-frame in FIG. 9) can be skipped and only CG PUSCH 1 resource can be transmitted.
- When a base station configures and activates a periodic radio resource (e.g., CG) to a UE, the base station may allocate multiple radio resources to the UE within one period. Multiple radio resources may be allocated with the same time/frequency resource allocation in a slot at regular intervals (e.g., M (M is a natural number) slots) (e.g., 3 symbols of radio resources are allocated repeatedly to the same location for each slot), or radio resources having the same length may be allocated consecutively in symbols consecutive to the first radio resource (e.g., 3 symbols of radio resources are allocated consecutively). The number of radio resources N (N is a natural number) may be determined by L1 signaling and/or higher layer signaling. For example, in FIG. 9, only one radio resource is allocated to both CG PUSCH 1 and CG PUSCH 2 in one period, however multiple radio resources may be allocated in one period.

- A base station/UE may perform transmission using one or some of the multiple CG radio resources within the period according to a traffic pattern. Here, considering the time of occurrence of user data of a base station/UE, the fastest radio resource capable of transmitting a transmission block (TB) including user data may be selected.

In the present disclosure, a base station can activate multiple CGs that are linked/associated with each other through one DCI or different DCIs. Here, different CGs can be mapped to the same or different UL cells. In addition, different CGs can be mapped to the same or different UL BWPs (bandwidth parts). In addition, different CGs can be mapped to the same or different RB (resource block) sets. For example, when two CGs are linked/associated, different periodic CG PUSCH resources for the two CGs can be allocated to one or more UL cells or one or more UL BWPs or one or more RB sets.

Embodiment 1: For periodic CG PUSCH resource(s) (i.e., TO(s)) for an activated CG, CG PUSCH transmission may be transmitted using only some CG PUSCH resources or CG PUSCH transmission may be skipped on some CG PUSCH resources based on a window (i.e., available resource(s)/duration) or mask (i.e., unavailable resource(s)/duration).

A window (or mask) can be configured/operated in a duration (or TO(s)) where a UE is expected to have no UL traffic at all or in a duration (or TO(s)) where a base station is to reduce power consumption.

Method 1-1: A base station can configure a periodic or aperiodic CG window for one or more specific CG(s) (i.e., specific CG configuration index (e.g., ConfigIndex)(s)). Through this, power consumption of a UE or a base station can be prevented.

In this case, when a corresponding CG is activated, a UE may determine that only the CG PUSCH resource(s) within (included in) the configured CG window are valid and transmit the CG PUSCH, and may determine that the CG PUSCH resource(s) outside (not included in) the CG window are invalid and may not transmit the CG PUSCH. A base station may also not receive the CG PUSCH transmission outside the CG window to reduce power consumption.

In addition, a UE may also ignore PUSCH resource allocation according to dynamic grant (DG) (e.g., UL grant by DCI) outside the CG window based on a base station configuration. That is, a UE may not transmit a PUSCH even if it receives PUSCH resource allocation according to DG grant in a period/resource other than the CG window.

Here, the CG window may be valid only for a certain period of time. For example, the CG window may be valid only within a certain CG period(s). As another example, it may be valid only for a certain period of time starting immediately after the CG window is configured/indicated by RRC/MAC CE/DCI or immediately after transmitting an ACK for the indication. Alternatively, the CG window may be configured to be valid continuously during the period in which the CG is activated.

Configuration information for the CG window may be included and configured in an RRC message (e.g., CG-config) that configures the CG, or may be indicated to a UE via MAC CE or DCI.

In addition, the CG window may be configured per CG configuration index (e.g., CG-ConfigIndex), per priority (i.e., priority for the CG), per cell, per UL BWP, or configured or instructed per UE. For example, the CG window may also be configured with a priority, and in this case, a CG window with a higher priority (HP) may be applied only to a CG with an HP, and a CG window with a lower priority (LP) may be applied only to a CG with an LP.

Configuration information for the CG window can be composed of a CG window start point (e.g., slot number/index or TO number/index) and a length (i.e., duration) (e.g., number of slots, number of TOs), and can be specified in slot units (or TO units). In addition, in the case of a periodic CG window, a period of the CG window can also be additionally configured. In addition, even in the case of a periodic CG window, if it has the same periodicity as a CG period, the CG period can be applied without additionally setting a period of the CG window.

For example, a MAC CE may include a CG configuration index (e.g., CG-ConfigIndex) field and CG window configuration information described above. Alternatively, DCI for activating CG with CRC (cyclic redundancy check) scrambled by a CS (configured scheduling)-RNTI or DCI for CG retransmission may indicate a CG window start time and a length (i.e., duration) (i.e., in this case, an identification of a CG configuration index may follow the conventional method).

If a UE receives new CG window configuration information after receiving and applying CG window configuration information, the UE can release the existing CG window configuration information and apply the new CG window configuration information. In this case, since separate signaling for releasing the CG window configuration is not used, signaling overhead can be reduced.

A UE may be configured to start a CG window timer at the start time of a CG window and to stop the CG window timer at the end time of the CG window. Accordingly, a UE may determine that a CG PUSCH is valid while the CG window timer is running. Here, the CG window timer and the CG timer (e.g., configuredGrantTimer, see Table 6) may be the same or different.

Method 1-2: A base station can configure a periodic or aperiodic CG mask for one or more specific CG(s) (i.e., specific CG configuration index (e.g., CG-ConfigIndex)(s)). This can prevent power consumption of a UE or a base station.

In this case, when a corresponding CG is activated, a UE may determine that only CG PUSCH resources outside (not included in) the configured CG mask are valid and transmit a CG PUSCH, and may determine that CG PUSCH resources within (included in) the CG mask are invalid and may not transmit a CG PUSCH. A base station may also not receive CG PUSCH transmission within the CG mask to reduce power consumption.

Here, the CG mask may be valid only for a certain period of time. For example, the CG mask may be valid only within a specific CG period(s). As another example, it may be valid only for a certain period of time starting immediately after the CG mask is configured/indicated by RRC/MAC CE/DCI or immediately after an ACK for the indication is transmitted. Alternatively, the CG mask may be configured to be valid continuously for the period during which the CG is activated.

Configuration information for this CG mask may be included and configured in an RRC message (e.g., CG-config) that configures the CG, or may be indicated to a UE via MAC CE or DCI.

In addition, the CG mask may be configured per CG configuration index (e.g., CG-ConfigIndex), per priority (i.e., priority for CG), per cell, per UL BWP, or configured or indicated per UE. For example, the CG mask may also be configured with priority, in which case a CG mask that is HP may be applied only to a CG that is HP, and a CG mask that is LP may be applied only to a CG that is LP.

Configuration information for the CG mask can be composed of a CG mask start point (e.g., slot number/index or TO number/index) and a length (i.e., duration) (e.g., number of slots, number of TOs), and can be specified in slot units (or TO units). In addition, in the case of a periodic CG window, a period of the CG window can also be additionally configured. In addition, even in the case of a periodic CG window, if it has the same periodicity as a CG period, the CG period can be applied without additionally setting a period of the CG window.

For example, a MAC CE may include a CG configuration index (e.g., CG-ConfigIndex) field and CG mask configuration information described above. Alternatively, DCI for activating CG with CRC (cyclic redundancy check) scrambled by a CS-RNTI or DCI for CG retransmission may indicate a CG mask start time and a length (i.e., duration) (i.e., in this case, an identification of a CG configuration index may follow the conventional method).

If a UE receives new CG mask configuration information after receiving and applying CG mask configuration information, the UE can release the existing CG mask configuration information and apply the new CG mask configuration information. In this case, since separate signaling for releasing the CG mask configuration is not used, signaling overhead can be reduced.

A UE may be configured to start a CG mask timer at the start time of a CG mask and to stop the CG mask timer at the end time of the CG mask. Accordingly, a UE may determine that a CG PUSCH is invalid while the CG mask timer is running. Here, the CG mask timer and the CG timer (e.g., configuredGrantTimer, see Table 6) may be the same or different.

Method 1-3: It can be indicated via DCI or DL MAC CE to skip CG PUSCH transmission on specific CG PUSCH resource(s) of one or more activated specific CG(s) (specific CG configuration index (e.g., CG-ConfigIndex)(s)).

If DCI indicates skipping of CG PUSCH transmission, the CRC of the DCI may be scrambled with a CS-RNTI or a separate RNTI. Here, if the DCI indicates a PUCCH resource, a UE receiving the DCI may transmit a HARQ ACK for reception of the DCI using the indicated PUCCH resource (i.e., the PUCCH resource is determined based on the information indicated by the DCI).

A HARQ process ID indicated by the DCI may be mapped to a CG configuration index (e.g., CG-ConfigIndex) of the CG.

In addition, the DCI may indicate activation of the CG or allocate retransmission resources. In this case, while indicating activation of the CG or allocating retransmission resources, skip for the corresponding CG may be indicated.

In addition, the DCI may indicate a skip duration (e.g., time duration or a number of TO(s)). Here, for example, the skip duration may indicate to skip transmission of one or more CG PUSCH(s) allocated immediately after receiving the DCI or immediately after transmitting an ACK for the DCI. As another example, the skip duration may indicate the number of CG period(s) that start immediately after receiving the DCI or immediately after transmitting an ACK for the DCI. In this way, if the DCI indicates a skip duration (i.e., if there is a field for indicating a skip duration), it may be considered that skip is indicated, whereas if the DCI does not indicate a skip duration (i.e., if there is no field for indicating a skip duration), it may be considered that skip is not indicated.

Additionally, when a MAC CE indicates CG transmission skip, the MAC CE may indicate a CG configuration index (e.g., CG-ConfigIndex) of the corresponding CG and the skip duration (e.g., the number of time intervals or TO(s)) of the corresponding CG.

Here, the skip duration may indicate to skip transmission of one or more CG PUSCH(s) allocated immediately after receiving the MAC CE or immediately after transmitting the ACK for the MAC CE. Alternatively, the skip duration may indicate the number of CG cycle(s) starting immediately after receiving the MAC CE or immediately after transmitting the ACK for the MAC CE. In this way, if the MAC CE indicates the skip duration (i.e., if there is a field for indicating the skip duration), it may be considered that skip is indicated, whereas if it does not indicate the skip duration (i.e., if there is no field for indicating the skip duration), it may be considered that skip is not indicated.

Method 1-4: Depending on a specific uplink transmission transmitted by a UE (e.g., PUSCH, PUCCH, uplink traffic, uplink control information (UCI), etc.), the CG PUSCH transmission for a specific CG (e.g., (for XR traffic) associated/linked with the specific uplink transmission) may be resumed or skipped. For example, depending on transmission of UCI or PUCCH transmission indicating or including pose information of a user of a UE, or CG PUSCH transmission for pose, a base station and a UE may resume or skip the CG PUSCH transmission of one or more specific CG(s) associated with the pose information (e.g., CG(s) for XR traffic).

For example, a UE supporting virtual reality (VR) can report pose information according to the motion of a user wearing the VR UE to a base station. For example, the VR UE can transmit pose information to the base station at a cycle of 4 ms.

For this purpose, for example, a base station can configure/allocate a separate logical channel for transmitting pose information and map/link it to a specific configured grant. In addition, the specific configured grant can be configured/defined to transmit only uplink data of the logical channel for pose. Here, the CG PUSCH resource for the pose can transmit UCI piggybacked together (i.e., transmit TB and UCI together), for example, such UCI can indicate whether the pose information has changed. For example, if there is a pose change of the user greater than a threshold compared to 4 ms ago (i.e., detected by the UE), UCI can be indicated as 1, otherwise 0 can be indicated. Alternatively, if there is a pose change compared to 4 ms ago (i.e., detected by the UE), 1 may be indicated by UCI, and if there is no pose change, 0 may be indicated. Alternatively, if multiple step thresholds are defined/configured, the largest pose change may be indicated as 11, a smaller pose change as 10, a smaller pose change as 01, and if there is no pose change, 00. The bit values indicated in the above-described UCI are only one example, and the present disclosure is not limited thereto.

Meanwhile, a TB of a PUSCH for pose may include pose information of the higher layer.

In addition, if there is no pose change or if there is a pose change but it is less than or equal to a threshold, a UE may skip transmission of both the CG PUSCH for pose and the UCI piggybacked thereon. Here, a data unit for pose information without pose change (e.g., a TB including the pose information) may also be discarded. For example, if there is no pose change or if there is a pose change but it is less than or equal to a threshold, a PDCP (packet data convergence protocol) entity providing a radio bearer for pose information may discard the data unit for the pose information. As another example, if there is no pose change or if there is a pose change but it is less than or equal to a threshold, a UE may be configured to discard the data unit by causing a PDCP discard timer to expire for the data unit of the pose information in the corresponding PDCP entity.

Alternatively, if there is no pose change or if there is a pose change but the number is less than the threshold, a UE may discard a TB containing only such pose information.

Alternatively, if there is no pose change or if there is a pose change but the number is less than the threshold, the higher layer of a UE may discard such pose information or transmit it to a separate radio bearer and logical channel. Here, the PDCP entity for the separate radio bearer may be configured to a PDCP discard timer that is shorter than that of the PDCP entity.

As another example, a base station can configure/allocate a separate logical channel for transmitting pose information and map/link it to a specific PUCCH resource and a specific scheduling request (SR) setting. Then, when pose information for the logical channel occurs, the pose information can be configured to trigger a buffer state request (BSR), and the BSR can be configured to trigger SR. Here, for example, a BSR MAC CE can indicate that a UE has pose information to transmit through a value of the logical channel group field or another specific field. Alternatively, when pose information for the logical channel occurs, it can be configured to trigger SR directly without BSR. When SR for pose is triggered, a UE can transmit UCI with a PUCCH resource for it.

Here, if there is no pose change or if there is a pose change but it is less than the threshold, it can be configured not to trigger BSR or SR. Alternatively, if there is no pose change or if there is a pose change but it is less than the threshold, it can be configured not to trigger BSR or SR by allowing pose information to be discarded.

For this purpose, for example, a base station can link/associate pose information with a specific CG configuration index (e.g., CG-ConfigIndex) (e.g., the first CG configuration), or link/associate pose information with a specific SR configuration. A UE and a base station can link/associate a specific CG for the pose (e.g., the first CG configuration) or a specific SR configuration (for XR traffic) with a specific CG (e.g., the second CG configuration). After transmitting UCI or CG PUSCH for the pose for the specific CG (e.g., the first CG configuration) or transmitting a specific SR PUCCH for the pose, a UE and a base station can start the CG window or CG mask immediately after (a specific time), or start the CG window timer or the CG mask timer.

Here, it can be determined whether the CG window (or CG window timer) or the CG mask (or CG mask timer) starts based on information or values within the UCI (e.g., pose information).

For example, if a value other than 1 or 00 is indicated by UCI or if the SR is transmitted, the CG window may start or the CG window timer may start immediately (at a specific time) from the time of pose information transmission or the time of UCI transmission or the time of SR transmission. Here, a UE may transmit CG PUSCH(s) during the CG window or while the CG window timer is running (for XR traffic).

As another example, if 0 or 00 is indicated by UCI or if the SR is transmitted, the CG mask may start or the CG mask timer may start (at a specific time) immediately after the pose information transmission time or the UCI transmission time or the SR transmission time. Here, a UE may skip CG PUSCH(s) transmission (for XR traffic) during the CG mask or while the CG mask timer is running.

The above specific time can be configured/indicated by a base station to a UE through an RRC message or MAC CE or DCI. Alternatively, a UE can specify it and transmit it to a base station by including it in the pose information. For example, the above specific time can be configured as a round trip time (RTT) timer.

Meanwhile, in the above methods 1-1 to 1-4, the CG window or CG mask or CG skip duration may be configured/indicated as the number of CG periods or the number of CG PUSCH resource(s) (i.e., the number of TOs) or the number of slots having CG PUSCH resources. In addition, the CG window or CG mask or CG skip duration may be configured for one or more CG configuration indices (e.g., CG-ConfigIndex). In addition, the CG window or CG mask or CG skip duration may be configured not to be applied to a CG configuration index (e.g., CG-ConfigIndex) for a CG for pose (i.e., a CG for transmitting pose information).

In addition, in the above methods 1-1 to 1-4, in the case of the CG mask or CG skip duration, a UE may also skip monitoring the retransmission DCI for the corresponding CG (i.e., the DCI for retransmission indication for the CG PUSCH) in addition to the CG PUSCH transmission. For this purpose, a search space of the retransmission DCI may be separately designated/configured. For example, the retransmission DCI is monitored in the corresponding search space, but the retransmission DCI may not be monitored in the CG mask or skip duration even in the corresponding search space.

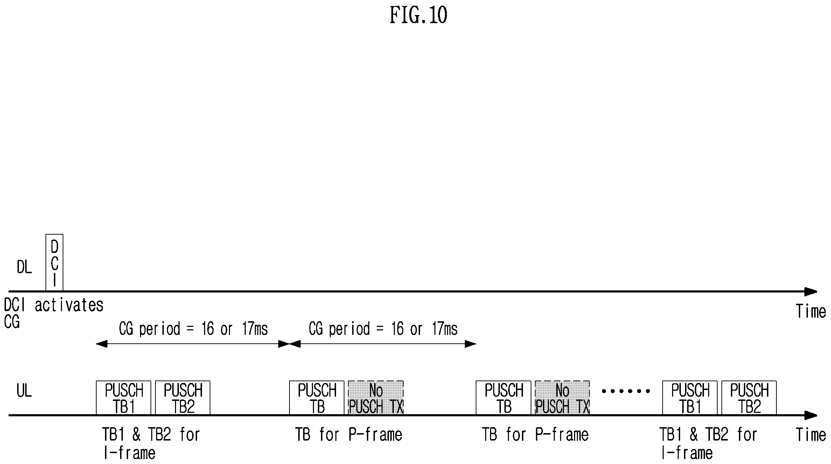

FIG. 10 illustrates a single configured grant configuration according to an embodiment of the present disclosure.

Hereinafter, an embodiment according to the present disclosure will be described with reference to FIG. 10.

Embodiment 2: When one CG configuration is configure for a UE, a CG PUSCH for the corresponding CG configuration can be transmitted and received as follows.

Here, a logical channel mapped to one CG configuration can be mapped only to specific CG period(s). In addition, the number of CG PUSCH occasions (i.e., TOs) allocated per CG period can be differentially allocated depending on the logical channel to which it is mapped.

According to the present embodiment, a UE can transmit a CG PUSCH in N (N is a natural number) CG PUSCH occasions (i.e., TOs) per CG period. For example, for CG PUSCHs belonging to (one or more) CG periods or CG windows that transmit data of a specific logical channel (hereinafter, a first logical channel), such as a logical channel of an I-frame, a UE can allocate and transmit N (N is a natural number) CG PUSCH occasions (i.e., TOs) per CG period.

Here, a base station can allocate N CG PUSCH occasions per CG period only within these (one or more) CG periods or CG windows. Alternatively, regardless of the CG period or CG window, a base station can always allocate N CG PUSCH occasions per CG period.

Meanwhile, for (i) CG PUSCHs that do not belong to (one or more) CG periods or CG windows in which first logical channel data are transmitted, or (ii) CG PUSCHs that belong to CG periods or CG windows in which other logical channel (i.e., a second logical channel) data are transmitted, a UE may transmit only k (K is a natural number) CG PUSCH occasions per CG period. Here, a base station can configure k to a value smaller than N. In the case of (i) above, if (one or more) CG periods or CG windows are configured for a first logical channel, configuration for (one or more) CG periods or CG windows for a second logical channel may be unnecessary. On the other hand, in the case of (ii) above, even if (one or more) CG periods or CG windows are configured for a first logical channel, configuration for (one or more) CG periods or CG windows for a second logical channel may also be required separately.

Here, a base station may allocate k CG PUSCH occasions (i.e., TOs) per CG period only within (one or more) CG periods or CG windows (i.e., in the case of (i), a period other than (one or more) CG periods or CG windows configured for a first logical channel, whereas in the case of (ii), a period or CG window or CG period configured for a second logical channel) associated with a second logical channel. Alternatively, a base station may allocate N CG PUSCH occasions (i.e., TOs) per CG period, regardless of (one or more) CG periods or CG windows associated with a second logical channel, but a UE may transmit only CG PUSCH in specific k CG PUSCH occasions out of the N CG PUSCH occasions and skip CG PUSCH transmission in the remaining N-k CG PUSCH occasions. Here, the specific k CG PUSCH occasions (i.e., TOs) may correspond to the first CG PUSCH occasion to the k-th CG PUSCH occasion of the corresponding CG period, or may correspond to the (N-k+1)th CG PUSCH occasion to the last (Nth) CG PUSCH occasion of the corresponding CG period.

Method 2-1: Both a first logical channel (e.g., logical channel for I-frame) and a second logical channel (e.g., logical channel for P-frame) can be mapped to a specific CG configuration. In addition, a base station can configure a first logical channel (e.g., logical channel for I-frame) to be mapped only to CG periods that are multiples of N (i.e., 0th CG period, N-th CG period, 2N-th CG period, etc.), and a second logical channel (e.g., logical channel for P-frame) to be mapped only to the remaining CG periods (i.e., 2nd to N-1-th CG periods, N+1-th to 2N-1-th CG periods, etc.). For example, if N is 10, the 0th, 10th, 20th, 30th, ... CG periods may be configured to map a first logical channel (e.g., logical channel for I-frame) and the remaining CG periods may be configured to map a second logical channel (e.g., logical channel for P-frame). Here, for example, a base station can configure a CG period of a specific CG configuration to 16 ms or 17 ms.

According to method 2-1, only the N value for the CG period to which a first logical channel is mapped may be configured by a base station, and accordingly, a first logical channel can be mapped to CG periods that is a multiple of N. And, even without a separate setting, a second logical channel can be mapped to the remaining CG periods.

Referring to FIG. 10, in the first CG cycle and the N-th CG period, a logical channel for an I-frame may be mapped, and TB 1 and TB 2 for an I-frame may be transmitted. In addition, in the remaining CG periods, a logical channel for a P-frame may be mapped, and a TB for a P-frame may be transmitted.

Method 2-2: Both a first logical channel (e.g., logical channel for I-frame) and a second logical channel (e.g., logical channel for P-frame) can be mapped to a specific CG configuration. Here, if there is data for a first logical channel (e.g., logical channel for I-frame), a TB can be constructed preferentially only with a first logical channel, and data of another second logical channel (e.g., logical channel for P-frame) may not be included in the TB. For example, if I-frame data occurs, a UE can transmit a CG PUSCH by constructing a TB with only I-frame data even if there is P-frame data. Here, if a UE transmits a TB for a first logical channel (e.g., logical channel for I-frame) in a specific CG period, it can expect to transmit a TB for a second logical channel (e.g., logical channel for P-frame) from the next CG cycle of the same CG configuration.

According to method 2-2, the priority for a first logical channel and a second logical channel can be configured by a base station. And, depending on whether data for the higher priority logical channel is generated by a UE, transmission of data for the lower priority logical channel can be skipped or deferred.

Referring to FIG. 10, it can be interpreted that data for a logical channel mapped to an I-frame is generated in the first CG period and the N-th CG period. Accordingly, TB 1 and TB 2 for an I-frame can be transmitted. Additionally, it can be interpreted that data for a logical channel mapped to an I-frame is not generated in the remaining CG periods. Accordingly, a TB for a P-frame can be transmitted.

Method 2-3: A CG window can be configured for a specific CG configuration. For CG PUSCH transmission within the configured CG window, a CG PUSCH can be transmitted only on a specific first logical channel (e.g., logical channel for I-frame). In addition, a base station and a UE can expect this type of operation.

Here, CG windows may be configured separately for each logical channel, and different logical channels may be mapped only to different CG windows.

Referring to FIG. 10, the first CG period and the N-th CG period may be interpreted as a case where CG windows for I-frames are configured, and the remaining CG periods may be interpreted as a case where CG windows for P-frames are configured. Therefore, only TB 1 and TB 2 of logical channels for I-frames may be transmitted in the first CG period and the N-th CG period, and only TBs of logical channels for P-frames may be transmitted in the remaining CG periods.

Embodiment 3: DRX-based CG PUSCH transmission method

In the present disclosure, the DRX active time (or DRX active (state)) may mean a DRX active time (or DRX active (state)) of a base station or a UE. For example, the DRX active time may be the cell DRX active time of a base station or a UE specific DRX active time.

In other words, the CG window in Embodiment 1 may be included in the cell DRX active time of a base station or may correspond to one example. In addition, the CG mask may be included in the cell DRX non-active time of a base station or may correspond to one example.

A UE may transmit only the CG or DG PUSCH that includes the UL slot(s) corresponding to the DRX active time or the UE active time. Alternatively, a UE may determine only the CG or DG PUSCH that includes the UL slot(s) corresponding to the DRX active time or the UE active time as a valid PUSCH resource, and invalidate or skip the other PUSCH resources. In other words, if any of the CG or DG PUSCH resources are UL slot(s) corresponding to the DRX active time or the UE active time, a UE may transmit the CG or DG PUSCH (or determine it to be valid). On the other hand, if none of the CG or DG PUSCH resources are UL slot(s) corresponding to the DRX active time or the UE active time, a UE may not transmit the CG or DG PUSCH (i.e., skip it) (or determine it to be invalid).

Alternatively, a UE transmits only on CG or DG PUSCH resources within the DRX active time or the UE active time. Alternatively, a UE may consider only CG or DG PUSCH within the DRX active time or the UE active time as valid PUSCH resources and invalidate or skip CG or DG PUSCH outside the DRX active time or the UE active time. In other words, if a CG or DG PUSCH resource is includes in the DRX active time or the UE active time, a UE may transmit (or consider as valid) the CG or DG PUSCH. On the other hand, if a CG or DG PUSCH resource does not belong to the DRX active time or the UE active time, a UE may not transmit (i.e., skip) (or consider as invalid) the CG or DG PUSCH.

Here, a separate on-duration timer for UL active time for CG PUSCH transmission may be periodically configured. Alternatively, a CG PUSCH may be transmitted only in the existing DRX active time period (see the above-described DRX operation and FIG. 7). The above-described DRX active time or separate on-duration may be mapped only to one or more specific CG-ConfigIndex(s), or only to one or more specific serving cells where CG is configured, or to all CG configurations (i.e., all CG configurations configured in the UE).

For example, if the DRX active time or separate on-duration is included in a specific CG PUSCH occasion, or conversely, if a specific CG PUSCH occasion is included in the DRX active time or separate on-duration, a UE may transmit the corresponding CG PUSCH. Otherwise, a UE may skip transmitting the corresponding CG PUSCH.

Here, if a UE transmits a specific CG PUSCH, the UE may start or restart an inactivity timer for the DRX active time or the UL active time. Then, the UE may transmit an additional CG PUSCH while the inactivity timer is running. After that, when the inactivity timer expires, a short or long DRX cycle may start.

The first CG PUSCH occasion of each CG period can be defined/configured to be included in the DRX active time or UL active time. Therefore, if a UE has data (e.g., TB) to transmit from a logical channel mapped to the corresponding CG, the UE can always transmit a CG PUSCH in the first CG PUSCH occasion of each CG period. Afterwards (if there is additional data to transmit from the logical channel mapped to the corresponding CG), the UE can start or restart the inactivity timer to transmit additional data (e.g., TB) through the next CG PUSCH occasion(s) of the same CG period.

Here, if a PUSCH cannot be transmitted because it is not included in the active time, a UE can transmit an additional TB through the PUSCH included in the next active time. If uplink transmission (e.g., TB, etc.) cannot be performed as a CG or DG PUSCH occasion because it is not included in the DRX active time or UE active time, a UE can perform the uplink transmission by shifting/changing the CG or DG PUSCH occasion to the next DRX active time or UE active time according to a base station configuration.

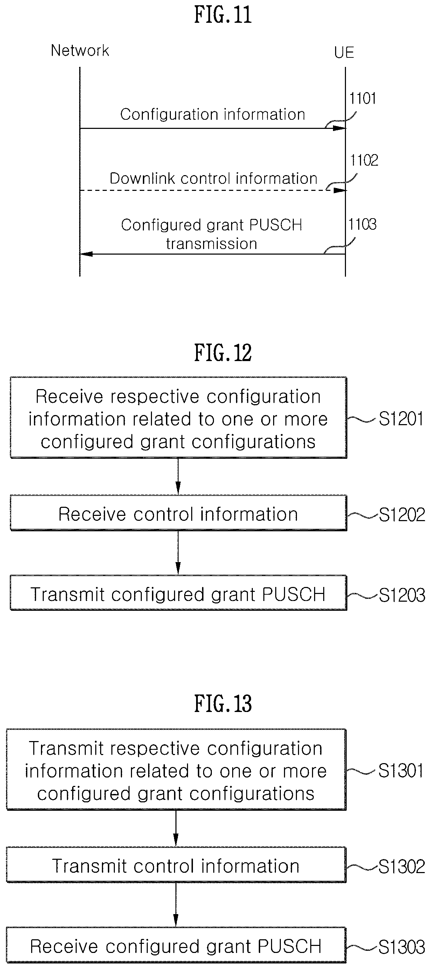

FIG. 11 illustrates a signaling procedure between a network and a UE for a method for transmitting and receiving a configured grant PUSCH according to an embodiment of the present disclosure.

FIG. 11 illustrates a signaling procedure between a user equipment (UE) and a network (e.g., TRP 1, TRP 2) based on the method proposed above (e.g., Embodiments 1 to 3, a combination of one or more of the proposed methods in Embodiments 1 to 3). Here, a UE/network is only an example and can be substituted with various devices. FIG. 11 is only for convenience of explanation and does not limit the scope of the present disclosure. In addition, some of the step(s) illustrated in FIG. 11 may be omitted depending on the situation and/or setting.

The signaling method described in FIG. 11 can be extended and applied to signaling between multiple TRPs and multiple UEs. In the following description, the network may be one base station including multiple TRPs, and may be one cell including multiple TRPs. For example, an ideal/non-ideal backhaul may be configured between TRP 1 and TRP 2 constituting the network. In addition, the following description is based on multiple TRPs, but it can be equally extended and applied to transmission through multiple panels. In addition, in the present disclosure, an operation of a UE receiving a signal from TRP1/TRP2 can also be interpreted/described as (or can be an operation of) an operation of a UE receiving a signal from a network (via/using TRP1/2), and an operation of a UE transmitting a signal to TRP1/TRP2 can also be interpreted/described as (or can be an operation of) an operation of a UE transmitting a signal to a network (via/using TRP1/TRP2), and vice versa.

A base station may be a general term for objects that transmit and receive data to and from a terminal. For example, the base station may be a concept including one or more transmission points (TPs), one or more transmission and reception points (TRPs), etc. In addition, a TP and/or a TRP may include a panel of a base station, a transmission and reception unit, etc. In addition, "TRP" may be substituted with an expression such as a panel, an antenna array, a cell (e.g., macro cell / small cell / pico cell, etc.), a TP (transmission point), a base station (base station, gNB, etc.) and applied. As described above, TRPs may be classified according to information (e.g., index, ID) on a CORESET group (or CORESET pool). For example, when one UE is configured to transmit and receive multiple TRPs (or cells), this may mean that multiple CORESET groups (or CORESET pools) are configured for one UE. Configuration of such a CORESET group (or CORESET pool) may be performed through higher layer signaling (e.g., RRC signaling, etc.).

A UE can receive configuration information from a network (S1101).

The configuration information may include information related to configuration of a network (e.g., TRP configuration) / information related to transmission and reception based on M-TRP (e.g., resource allocation, etc.). Here, the configuration information may be transmitted through higher layer signaling (e.g., RRC signaling, MAC-CE, etc.).

The configuration information may include configuration information related to the CG configuration described in the above-described proposed method (e.g., Embodiments 1 to 3, a combination of one or more of the proposed methods in Embodiments 1 to 3). For example, one or more CG configurations may be configured to a UE, and the configuration information may include individual configuration information (e.g., configuredGrantConfig IE) for each of the one or more CG configurations. Here, the individual configuration information for each of the one or more CG configurations may include information/parameters exemplified in Table 6 above.

In addition, for example, according to the above-described embodiment, individual configuration information for each CG configuration may include information on a logical channel associated with the corresponding CG configuration.

A UE can receive downlink control information from a network (S1102).

As described above, CG Type 1 PUSCH transmission can be configured to operate semi-statically when receiving configuration information for CG configuration (e.g., configuredGrantConfig including rrc-ConfiguredUplink-Grant) without detection of UL grant in DCI. In this case, step S1102 can be omitted. Also, in this case, TCI stated for one or more CG configurations configured in s UE can be configured by configuration information related to the CG configuration (e.g., configuredGrantConfig IE) or configured/indicated by a MAC CE described above.

In addition, CG Type 2 PUSCH transmission can be semi-statically scheduled by UL grant in valid activation DCI after receiving configuration information for CG configuration (e.g., configuredGrantConfig not including rrc-ConfiguredUplinkGrant). In this case, DCI of step S1102 can correspond to valid activation DCI. In addition, in this case, TCI states for one or more CG configurations configured in a UE can be configured by configuration information related to the CG configuration (e.g., configuredGrantConfig IE) or configured/indicated by a MAC CE described above or indicated by valid activation DCI.

Here, according to the Embodiment 1, a MAC CE or DCI (e.g., valid activation DCI) may include information on a specific duration (e.g., a non-active duration).

For example, the information on the specific duration may include a start time and a length of the specific duration. Here, the start time and the length may be indicated in units of CG PUSCH resources (or TOs) or slots.

In addition, the specific duration may be configured periodically or non-periodically. Here, if the specific duration is configured periodically, the information on the specific duration may further include periodic information.

The information on the specific duration may be valid/applicable only in a predetermined period. For example, it may be valid/applicable only for a predetermined time immediately after the control information is received or immediately after the ACK (acknowledgement) for the control information is transmitted.

In addition, the specific duration may be configured/indicated not to be included in the DRX active time according to the Embodiment 3 (e.g., the cell DRX active time of the base station or the UE specific DRX active time).

A UE transmits a grant (CG) PUSCH configured to a network (S1103).

Here, a UE can transmit a CG PUSCH to a network based on the operation described in the proposed method described above (e.g., Embodiments 1 to 3, a combination of one or more of the proposed methods in Embodiments 1 to 3).

Here, for example, according to the Embodiment 1, if a MAC CE or DCI (e.g., valid activation DCI) includes information on a specific duration (e.g., a non-active duration), transmission of the CG PUSCH may not be performed in the CG PUSCH resources (or TOs) for the one or more CG configurations included in the specific duration. In addition, a CG PUSCH may be transmitted in the CG PUSCH resources (or TOs) for the one or more CG configurations not included in the specific duration.

Here, as described above, the information for the specific duration may be valid/applicable only in a predetermined period. For example, it may be valid/applicable only for a predetermined time period immediately after the control information is received or immediately after an ACK (acknowledgement) for the control information is transmitted. That is, only in a period to which the information for the specific duration is valid/applicable, transmission of the CG PUSCH may not be performed in the CG PUSCH resources (or TOs) for the one or more CG configurations in the specific duration. And, in a period to which the information for the specific duration is not valid/applicable, transmission of the CG PUSCH in the CG PUSCH resources (or TOs) for the one or more CG configurations may be performed regardless of the control information.

In addition, for example, according to the Embodiment 2, only specific logical channels may be mapped to specific (one or more) periods in one CG configuration, and a TB transmitted in a CG PUSCH may be determined according to the logical channel mapped according to the (one or more) CG periods. Alternatively, when multiple logical channels are mapped in one CG configuration, a TB transmitted in a CG PUSCH may be determined according to the priority of the logical channels. Alternatively, only specific logical channels may be mapped within a specific CG window in one CG configuration, and only a CG PUSCH for the corresponding logical channel may be transmitted.

Here, for example, according to the Embodiment 3, a CG PUSCH may be transmitted only in CG PUSCH resources for one or more CG configurations included in a DRX active time (e.g., cell DRX active time of the base station or UE specific DRX active time). On the other hand, transmission of a CG PUSCH may not be performed in CG PUSCH resources for one or more CG configurations not included in the DRX active time.

Here, as described above, the specific duration may not be included in the DRX active time (e.g., the cell DRX active time of the base station or the UE specific DRX active time). That is, in this case, the specific duration may be configured/indicated by the control information so that the transmission of the CG PUSCH can be guaranteed during the DRX active time.

According to the Embodiment 1 or Embodiment 3 described above, the CG PUSCH resource (or TO) on which a CG PUSCH is not transmitted may have its position changed (shifted) in the time domain, and the CG PUSCH may be transmitted in the changed CG PUSCH resource (or TO).

FIG. 12 is a diagram illustrating an operation of a UE for a method for transmitting and receiving a configured grant PUSCH according to an embodiment of the present disclosure.

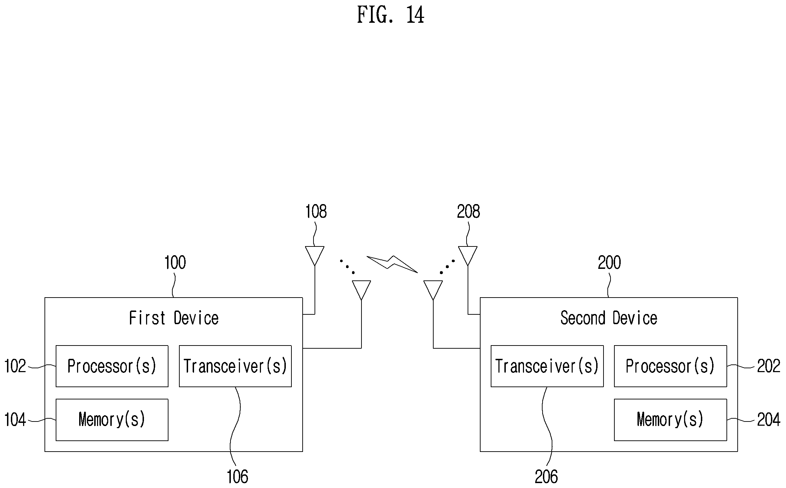

Referring to FIG. 12, FIG. 12 illustrates an operation of a UE based on the proposed methods (e.g., Embodiments 1 to 3, a combination of one or more of the proposed methods in Embodiments 1 to 3). The example of FIG. 12 is for convenience of explanation and does not limit the scope of the present disclosure. Some step(s) illustrated in FIG. 12 may be omitted depending on a situation and/or setting. In addition, the UE in FIG. 12 is only an example and may be implemented as a device illustrated in FIG. 14 below. For example, the processor (102/202) of FIG. 14 may control the transceiver (106/206) to transmit and receive channels/signals/data/information, etc., and may also control the processor (102/202) of FIG. 14 to store transmitted or received channels/signals/data/information, etc. in a memory (104/204).

In addition, the operation of FIG. 12 may be processed by one or more processors (102, 202) of FIG. 14, and the operation of FIG. 12 may be stored in a memory (e.g., one or more memories (104, 204) of FIG. 14) in the form of a command/program (e.g., an instruction, an executable code) for driving at least one processor (e.g., 102, 202) of FIG. 14.

A UE receives individual configuration information related to one or more configured grant (CG) configurations from a base station (S1201).

The configuration information related to the CG configuration may include configuration information related to the CG configuration described in the above-described proposed method (e.g., Embodiments 1 to 3, a combination of one or more of the proposed methods in Embodiments 1 to 3). For example, one or more CG configurations may be configured to a UE, and individual configuration information (e.g., configuredGrantConfig IE) for each of the one or more CG configurations may include information/parameters exemplified in Table 6 above.

In addition, for example, according to the above-described embodiment, individual configuration information for each CG configuration may include information on a logical channel associated with the corresponding CG configuration.

A UE receives control information from a base station (S1202).

As described above, CG Type 1 PUSCH transmission can be configured to operate semi-statically when receiving configuration information for CG configuration (e.g., configuredGrantConfig including rrc-ConfiguredUplink-Grant) without detection of UL grant in DCI. In this case, the control information at step S1202 may correspond to a MAC CE (e.g., a MAC CE that activates CG settings).

In addition, CG Type 2 PUSCH transmission can be semi-statically scheduled by UL grant in valid activation DCI after receiving configuration information for CG configuration (e.g., configuredGrantConfig not including rrc-ConfiguredUplinkGrant). In this case, DCI of step S1202 can correspond to valid activation DCI.

Here, according to the Embodiment 1, a MAC CE or DCI (e.g., valid activation DCI) may include information on a specific duration (e.g., a non-active duration).

For example, the information on the specific duration may include a start time and a length of the specific duration. Here, the start time and the length may be indicated in units of CG PUSCH resources (or TOs) or slots.

In addition, the specific duration may be configured periodically or non-periodically. Here, if the specific duration is configured periodically, the information on the specific duration may further include periodic information.

The information on the specific duration may be valid/applicable only in a predetermined period. For example, it may be valid/applicable only for a predetermined time immediately after the control information is received or immediately after the ACK (acknowledgement) for the control information is transmitted.

In addition, the specific duration may be configured/indicated not to be included in the DRX active time according to the Embodiment 3 (e.g., the cell DRX active time of the base station or the UE specific DRX active time).

A UE transmits a configured grant (CG) PUSCH to a base station (S1203).

Here, a UE can transmit a CG PUSCH to a base station based on the operation described in the proposed method described above (e.g., Embodiments 1 to 3, a combination of one or more of the proposed methods in Embodiments 1 to 3).

Here, for example, according to the Embodiment 1, if a MAC CE or DCI (e.g., valid activation DCI) includes information on a specific duration (e.g., a non-active duration), transmission of the CG PUSCH may not be performed in the CG PUSCH resources (or TOs) for the one or more CG configurations included in the specific duration. In addition, a CG PUSCH may be transmitted in the CG PUSCH resources (or TOs) for the one or more CG configurations not included in the specific duration.

Here, as described above, the information for the specific duration may be valid/applicable only in a predetermined period. For example, it may be valid/applicable only for a predetermined time period immediately after the control information is received or immediately after an ACK (acknowledgement) for the control information is transmitted. That is, only in a period to which the information for the specific duration is valid/applicable, transmission of the CG PUSCH may not be performed in the CG PUSCH resources (or TOs) for the one or more CG configurations in the specific duration. And, in a period to which the information for the specific duration is not valid/applicable, transmission of the CG PUSCH in the CG PUSCH resources (or TOs) for the one or more CG configurations may be performed regardless of the control information.

In addition, for example, according to the Embodiment 3, a CG PUSCH may be transmitted only in CG PUSCH resources for one or more CG configurations included in a DRX active time (e.g., cell DRX active time of the base station or UE specific DRX active time). On the other hand, transmission of a CG PUSCH may not be performed in CG PUSCH resources for one or more CG configurations not included in the DRX active time.

Here, as described above, the specific duration may not be included in the DRX active time (e.g., the cell DRX active time of the base station or the UE specific DRX active time). That is, in this case, the specific duration may be configured/indicated by the control information so that the transmission of the CG PUSCH can be guaranteed during the DRX active time.

According to the Embodiment 1 or Embodiment 3 described above, the CG PUSCH resource (or TO) on which a CG PUSCH is not transmitted may have its position changed (shifted) in the time domain, and the CG PUSCH may be transmitted in the changed CG PUSCH resource (or TO).

FIG. 13 is a diagram illustrating an operation of a base station for a method for transmitting and receiving a configured grant PUSCH according to an embodiment of the present disclosure.

Referring to FIG. 13, FIG. 13 illustrates an operation of a base station based on the proposed methods (e.g., Embodiments 1 to 3, a combination of one or more of the proposed methods in Embodiments 1 to 3). The example of FIG. 13 is for convenience of explanation and does not limit the scope of the present disclosure. Some step(s) illustrated in FIG. 13 may be omitted depending on a situation and/or setting. In addition, the base station in FIG. 13 is only an example and may be implemented as a device illustrated in FIG. 14 below. For example, the processor (102/202) of FIG. 14 may control the transceiver (106/206) to transmit and receive channels/signals/data/information, etc., and may also control the processor (102/202) of FIG. 14 to store transmitted or received channels/signals/data/information, etc. in a memory (104/204).

In addition, the operation of FIG. 13 may be processed by one or more processors (102, 202) of FIG. 14, and the operation of FIG. 13 may be stored in a memory (e.g., one or more memories (104, 204) of FIG. 14) in the form of a command/program (e.g., an instruction, an executable code) for driving at least one processor (e.g., 102, 202) of FIG. 14.

A base station transmits individual configuration information related to one or more configured grant (CG) configurations to a UE (S1301).

The configuration information related to the CG configuration may include configuration information related to the CG configuration described in the above-described proposed method (e.g., Embodiments 1 to 3, a combination of one or more of the proposed methods in Embodiments 1 to 3). For example, one or more CG configurations may be configured to a UE, and individual configuration information (e.g., configuredGrantConfig IE) for each of the one or more CG configurations may include information/parameters exemplified in Table 6 above.

In addition, for example, according to the above-described embodiment, individual configuration information for each CG configuration may include information on a logical channel associated with the corresponding CG configuration.

A base station transmits control information to a UE (S1302).

As described above, CG Type 1 PUSCH transmission can be configured to operate semi-statically when receiving configuration information for CG configuration (e.g., configuredGrantConfig including rrc-ConfiguredUplink-Grant) without detection of UL grant in DCI. In this case, the control information at step S1302 may correspond to a MAC CE (e.g., a MAC CE that activates CG settings).

In addition, CG Type 2 PUSCH transmission can be semi-statically scheduled by UL grant in valid activation DCI after receiving configuration information for CG configuration (e.g., configuredGrantConfig not including rrc-ConfiguredUplinkGrant). In this case, DCI of step S1302 can correspond to valid activation DCI.

Here, according to the Embodiment 1, a MAC CE or DCI (e.g., valid activation DCI) may include information on a specific duration (e.g., a non-active duration).

For example, the information on the specific duration may include a start time and a length of the specific duration. Here, the start time and the length may be indicated in units of CG PUSCH resources (or TOs) or slots.

In addition, the specific duration may be configured periodically or non-periodically. Here, if the specific duration is configured periodically, the information on the specific duration may further include periodic information.

The information on the specific duration may be valid/applicable only in a predetermined period. For example, it may be valid/applicable only for a predetermined time immediately after the control information is received or immediately after the ACK (acknowledgement) for the control information is transmitted.

In addition, the specific duration may be configured/indicated not to be included in the DRX active time according to the Embodiment 3 (e.g., the cell DRX active time of the base station or the UE specific DRX active time).

A base station receives a configured grant (CG) PUSCH from a UE (S1303).

Here, a base station can receive a CG PUSCH from a UE based on the operation described in the proposed method described above (e.g., Embodiments 1 to 3, a combination of one or more of the proposed methods in Embodiments 1 to 3).

Here, for example, according to the Embodiment 1, if a MAC CE or DCI (e.g., valid activation DCI) includes information on a specific duration (e.g., a non-active duration), transmission of the CG PUSCH may not be performed in the CG PUSCH resources (or TOs) for the one or more CG configurations included in the specific duration. In addition, a CG PUSCH may be transmitted in the CG PUSCH resources (or TOs) for the one or more CG configurations not included in the specific duration.

Here, as described above, the information for the specific duration may be valid/applicable only in a predetermined period. For example, it may be valid/applicable only for a predetermined time period immediately after the control information is received or immediately after an ACK (acknowledgement) for the control information is transmitted. That is, only in a period to which the information for the specific duration is valid/applicable, transmission of the CG PUSCH may not be performed in the CG PUSCH resources (or TOs) for the one or more CG configurations in the specific duration. And, in a period to which the information for the specific duration is not valid/applicable, transmission of the CG PUSCH in the CG PUSCH resources (or TOs) for the one or more CG configurations may be performed regardless of the control information.

In addition, for example, according to the Embodiment 3, a CG PUSCH may be transmitted only in CG PUSCH resources for one or more CG configurations included in a DRX active time (e.g., cell DRX active time of the base station or UE specific DRX active time). On the other hand, transmission of a CG PUSCH may not be performed in CG PUSCH resources for one or more CG configurations not included in the DRX active time.

Here, as described above, the specific duration may not be included in the DRX active time (e.g., the cell DRX active time of the base station or the UE specific DRX active time). That is, in this case, the specific duration may be configured/indicated by the control information so that the transmission of the CG PUSCH can be guaranteed during the DRX active time.

According to the Embodiment 1 or Embodiment 3 described above, the CG PUSCH resource (or TO) on which a CG PUSCH is not transmitted may have its position changed (shifted) in the time domain, and the CG PUSCH may be transmitted in the changed CG PUSCH resource (or TO).

General Device to which the Present Disclosure may be applied

FIG. 14 is a diagram which illustrates a block diagram of a wireless communication device according to an embodiment of the present disclosure.

In reference to FIG. 14, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

   receiving, from a base station respective configuration information related to one or more configured grant (CG) configurations;
   receiving control information from the base station, wherein the control information includes information on a specific duration, and transmission of a CG PUSCH (physical uplink shared channel) is not performed on CG PUSCH resources for one or more CG configurations included in the specific duration; and
   transmitting the CG PUSCH on CG PUSCH resources for the one or more CG configurations not included in the specific duration.

2. The method of claim 1, wherein the information on the specific duration includes a start time and a length of the specific duration, and wherein the start time and the length are indicated in units of CG PUSCH resources or slots.

3. The method of claim 1, wherein the specific duration is configured periodically or aperiodically.

4. The method of claim 1, wherein the information on the specific duration is valid only for a predetermined time immediately after the control information is received or immediately after an ACK (acknowledgement) for the control information is transmitted.

5. The method of claim 1, wherein the control information is a MAC (medium access control) control element (CE) or downlink control information (DCI).

6. The method of claim 1, wherein the specific duration is not included in a discontinuous reception (DRX) active time.

7. The method of claim 6, wherein the CG PUSCH is transmitted only in CG PUSCH resources for the one or more CG configurations included in the DRX active time.

8. The method of claim 6, wherein the CG PUSCH is not transmitted in CG PUSCH resources for the one or more CG configurations that are not included in the DRX active time.

9. The method of claim 1, wherein the CG PUSCH resources in which the CG PUSCH is not transmitted are shifted in a time domain, and the CG PUSCH is transmitted in the shifted CG PUSCH resources.

10. The method of claim 1, wherein the specific duration is a non-active duration.

11. A user equipment (UE) operating in a wireless communication system, the UE comprising:

at least one transceiver for transmitting and receiving a wireless signal; and
at least one processor for controlling the at least one transceiver,
wherein the at least one processor configured to:

receive, from a base station respective configuration information related to one or more configured grant (CG) configurations;
receive control information from the base station, wherein the control information includes information on a specific duration, and transmission of a CG PUSCH (physical uplink shared channel) is not performed on CG PUSCH resources for one or more CG configurations included in the specific duration; and
transmit the CG PUSCH on CG PUSCH resources for the one or more CG configurations not included in the specific duration.

12. At least one non-transitory computer-readable medium storing at least one instruction, wherein the at least one instruction executable by at least one processor controls a user equipment (UE) to:

receive, from a base station respective configuration information related to one or more configured grant (CG) configurations;
receive control information from the base station, wherein the control information includes information on a specific duration, and transmission of a CG PUSCH (physical uplink shared channel) is not performed on CG PUSCH resources for one or more CG configurations included in the specific duration; and
transmit the CG PUSCH on CG PUSCH resources for the one or more CG configurations not included in the specific duration.

13. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

receiving, from a base station respective configuration information related to one or more configured grant (CG) configurations;
receiving control information from the base station, wherein the control information includes information on a specific duration, and transmission of a CG PUSCH (physical uplink shared channel) is not performed on CG PUSCH resources for one or more CG configurations included in the specific duration; and
transmitting the CG PUSCH on CG PUSCH resources for the one or more CG configurations not included in the specific duration.

14. A method performed by a base station in a wireless communication system, the method comprising:

transmitting, to a user equipment (UE), respective configuration information related to one or more configured grant (CG) configurations;
transmitting control information to the UE, wherein the control information includes information on a specific duration, and transmission of a CG PUSCH (physical uplink shared channel) is not received on CG PUSCH resources for one or more CG configurations included in the specific duration; and
receiving the CG PUSCH on CG PUSCH resources for the one or more CG configurations not included in the specific duration.

15. A base station operating in a wireless communication system, the UE comprising:

at least one transceiver for transmitting and receiving a wireless signal; and
at least one processor for controlling the at least one transceiver,
wherein the at least one processor configured to:

transmit, to a user equipment (UE), respective configuration information related to one or more configured grant (CG) configurations;
transmit control information to the UE, wherein the control information includes information on a specific duration, and transmission of a CG PUSCH (physical uplink shared channel) is not received on CG PUSCH resources for one or more CG configurations included in the specific duration; and
receive the CG PUSCH on CG PUSCH resources for the one or more CG configurations not included in the specific duration.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

Freq.

1ms subframe:
14 symbols/slot

12 × 15 KHz

12 × 30 KHz

PRB

12 × 60 KHz

Time

# FIG.5

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

EP 4 518 512 A1

FIG.7

FIG.8

# FIG.9

DL    D
      C
      I

DCI activates CG
CG PUSCH 1
& PUSCH 2

Time

CG1 perioid = (16 or 17ms) X N

CG2 perioid = 16 or 17ms

UL

| PUSCH1 | PUSCH1 |
| TB1 | TB2 |
|  | PUSCH2 |
|  | TB2 |

PUSCH2
TB

PUSCH2
TB

· · · · · ·

| PUSCH1 | PUSCH1 |
| TB1 | TB2 |
|  | PUSCH2 |
|  | TB2 |

Time

TB1 & TB2 for
I-frame

TB for P-frame

TB for P-frame

TB1 & TB2 for
I-frame

EP 4 518 512 A1

FIG.10

EP 4 518 512 A1

DL [DCI]

DCI activates CG

CG period = 16 or 17ms    CG period = 16 or 17ms    Time

UL  [PUSCH TB1][PUSCH TB2]  [PUSCH TB][No PUSCH TX]  [PUSCH TB][No PUSCH TX] ······ [PUSCH TB1][PUSCH TB2]

TB1 & TB2 for I-frame      TB for P-frame            TB for P-frame              TB1 & TB2 for I-frame    Time

## FIG. 11

Network                                           UE

Configuration information                    1101

Downlink control information                 1102

Configured grant PUSCH
transmission                                 1103

## FIG. 12

| Receive respective configuration information related to one or more configured grant configurations | S1201 |

| Receive control information | S1202 |

| Transmit configured grant PUSCH | S1203 |

## FIG. 13

| Transmit respective configuration information related to one or more configured grant configurations | S1301 |

| Transmit control information | S1302 |

| Receive configured grant PUSCH | S1303 |

FIG. 14

## INTERNATIONAL SEARCH REPORT

| | International application No. |
|---|---|
| | **PCT/KR2023/005848** |

| A. | CLASSIFICATION OF SUBJECT MATTER |
|---|---|

**H04W 72/12**(2009.01)i; **H04W 72/231**(2023.01)i; **H04W 72/232**(2023.01)i; **H04W 72/04**(2009.01)i; **H04W 76/28**(2018.01)i; **H04L 1/18**(2006.01)i

According to International Patent Classification (IPC) or to both national classification and IPC

| B. | FIELDS SEARCHED |
|---|---|

Minimum documentation searched (classification system followed by classification symbols)

H04W 72/12(2009.01); H04W 52/02(2009.01); H04W 72/04(2009.01); H04W 72/14(2009.01); H04W 74/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 설정된 그랜트(configured grant, CG), 특정 구간(specific duration), CG PUSCH, ACK, MAC CE, DCI, DRX active time, non-active time

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0185609 A1 (OFINNO, LLC) 17 June 2021 (2021-06-17)<br>See paragraphs [0267], [0304] and [0359]-[0370]; and figure 39. | 1-15 |
| A | US 2021-0051701 A1 (QUALCOMM INCORPORATED) 18 February 2021 (2021-02-18)<br>See paragraphs [0096]-[0099]; and claim 1. | 1-15 |
| A | US 2022-0124707 A1 (LG ELECTRONICS INC.) 21 April 2022 (2022-04-21)<br>See paragraphs [0042]-[0302]. | 1-15 |
| A | US 2022-0124793 A1 (GUANGDONG OPPO MOBILE TELECOMMUNICATIONS CORP., LTD.) 21 April 2022 (2022-04-21)<br>See paragraphs [0022]-[0163]. | 1-15 |
| A | WO 2021-253207 A1 (QUALCOMM INCORPORATED) 23 December 2021 (2021-12-23)<br>See paragraphs [0020]-[0091]. | 1-15 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005848**

| Patent document cited in search report | | | Publication date (day/month/year) | Patent family member(s) | | | Publication date (day/month/year) |
|---|---|---|---|---|---|---|---|
| US | 2021-0185609 | A1 | 17 June 2021 | CN | 113557767 | A | 26 October 2021 |
| | | | | CN | 113557767 | B | 16 September 2022 |
| | | | | CN | 116095795 | A | 09 May 2023 |
| | | | | EP | 3804417 | A1 | 14 April 2021 |
| | | | | JP | 2022-520044 | A | 28 March 2022 |
| | | | | KR | 10-2021-0126677 | A | 20 October 2021 |
| | | | | US | 11166234 | B2 | 02 November 2021 |
| | | | | US | 2022-0060981 | A1 | 24 February 2022 |
| | | | | WO | 2020-167896 | A1 | 20 August 2020 |
| US | 2021-0051701 | A1 | 18 February 2021 | CN | 114208366 | A | 18 March 2022 |
| | | | | EP | 4014644 | A1 | 22 June 2022 |
| | | | | US | 11540310 | B2 | 27 December 2022 |
| | | | | WO | 2021-030144 | A1 | 18 February 2021 |
| US | 2022-0124707 | A1 | 21 April 2022 | CN | 113424631 | A | 21 September 2021 |
| | | | | EP | 3911095 | A1 | 17 November 2021 |
| | | | | WO | 2020-167014 | A1 | 20 August 2020 |
| US | 2022-0124793 | A1 | 21 April 2022 | CN | 113711660 | A | 26 November 2021 |
| | | | | CN | 114364037 | A | 15 April 2022 |
| | | | | CN | 114364037 | B | 26 May 2023 |
| | | | | EP | 3972360 | A1 | 23 March 2022 |
| | | | | EP | 3972360 | A4 | 08 June 2022 |
| | | | | JP | 2022-551789 | A | 14 December 2022 |
| | | | | KR | 10-2022-0062496 | A | 17 May 2022 |
| | | | | WO | 2021-046778 | A1 | 18 March 2021 |
| WO | 2021-253207 | A1 | 23 December 2021 | | None | | |

Form PCT/ISA/210 (patent family annex) (July 2022)